(19) **Europäisches Patentamt / European Patent Office / Office européen des brevets**

(11) **EP 4 535 681 A1**

(12) **EUROPEAN PATENT APPLICATION**
published in accordance with Art. 153(4) EPC

(43) Date of publication:
09.04.2025 Bulletin 2025/15

(21) Application number: 23829840.0

(22) Date of filing: 31.05.2023

(51) International Patent Classification (IPC):
*H04B 7/0456* (2017.01)

(52) Cooperative Patent Classification (CPC):
H04B 7/0456; H04L 5/00; H04L 25/02

(86) International application number:
PCT/CN2023/097383

(87) International publication number:
WO 2024/001655 (04.01.2024 Gazette 2024/01)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 29.06.2022 CN 202210761826

(71) Applicant: Huawei Technologies Co., Ltd.
Shenzhen, Guangdong 518129 (CN)

(72) Inventors:
• CAI, Shijie
  Shenzhen, Guangdong 518129 (CN)
• GAO, Xiang
  Shenzhen, Guangdong 518129 (CN)
• LIU, Kunpeng
  Shenzhen, Guangdong 518129 (CN)

(74) Representative: Maiwald GmbH
Engineering
Elisenhof
Elisenstrasse 3
80335 München (DE)

(54) **COMMUNICATION METHOD, AND APPARATUS**

(57) This application provides a communication method and apparatus, and relates to the field of communication technologies. In the communication method, a network device may receive a plurality of first uplink signals from a plurality of terminal devices on a first resource. The network device determines a downlink precoding matrix based on the plurality of first uplink signals, where the downlink precoding matrix is used to send data to the plurality of terminal devices. Because the downlink precoding matrix is shared by the plurality of terminal devices, the network device does not need to separately determine a downlink precoding matrix for each terminal device. Therefore, a process in which the network device determines downlink precoding matrices for the plurality of terminal devices is simplified.

FIG. 2

EP 4 535 681 A1

**Description**

**CROSS-REFERENCE TO RELATED APPLICATIONS**

This application claims priority to Chinese Patent Application No. 202210761826.4, filed with the China National Intellectual Property Administration on June 29, 2022 and entitled "COMMUNICATION METHOD AND APPARATUS", which is incorporated herein by reference in its entirety.

**TECHNICAL FIELD**

This application relates to the field of communication technologies, and in particular, to a communication method and apparatus.

**BACKGROUND**

A base station may configure, for a terminal device, a resource used to send a sounding reference signal (sounding reference signal, SRS), and the terminal device sends the SRS to the base station on the configured resource. The base station may perform channel estimation based on the received SRS, to determine a downlink precoding matrix.
When the base station serves a large quantity of terminal devices, the base station needs to separately perform channel estimation on each of a plurality of terminal devices, to determine a downlink precoding matrix for each of the plurality of terminal devices. It can be learned that a process in which the base station determines downlink precoding matrices for the plurality of terminal devices is complex.

**SUMMARY**

Embodiments of this application provide a communication method and apparatus, to simplify a process of determining precoding matrices for a plurality of terminal devices.
According to a first aspect, an embodiment of this application provides a communication method. The method may be performed by a network device, or may be performed by a chip system. The chip system may implement a function of the network device. For ease of description, the following uses an example in which the method is performed by the network device. The method includes: receiving a plurality of uplink signals from a plurality of terminal devices on a first resource, where each uplink signal is from one of the plurality of terminal devices; and determining a downlink precoding matrix based on the plurality of uplink signals, where the downlink precoding matrix is used to send data to the plurality of terminal devices.
In this embodiment of this application, the plurality of terminal devices may separately send the uplink signals on the first resource, and the network device may determine, based on the uplink signals from the plurality of terminal devices, the downlink precoding matrix shared by the plurality of terminal devices, without a need to separately determine a precoding matrix for each of the plurality of terminal devices. This simplifies a process of determining downlink precoding matrices for the plurality of terminal devices, and helps reduce calculation overheads of the network device. In addition, the plurality of terminal devices share one downlink precoding matrix, which helps reduce downlink precoding overheads. In addition, all the plurality of terminal devices send the first uplink signals on the first resource, which helps reduce resource overheads required by the plurality of terminal devices to send the uplink signals.
In a possible implementation, the plurality of uplink signals are reference signals. Alternatively, the plurality of uplink signals are analog signals. Each of the plurality of terminal devices corresponds to one first matrix. Each first matrix includes at least one zero element and/or at least one non-zero element. Each non-zero element is a combination coefficient. The combination coefficient is a combination coefficient of a spatial domain vector and a frequency domain vector. Each uplink signal indicates M elements. The M elements are M elements in a first matrix corresponding to a terminal device that sends the uplink signal. The M elements are at M locations in the first matrix. The M locations are different. M is a positive integer.
In this implementation, two specific implementations of the uplink signal are provided. One type of uplink signal is a reference signal. In this case, the network device may determine the downlink precoding matrix based on reference signals of the plurality of terminal devices. Because all the plurality of terminal devices send the uplink signals on the first resource, resource overheads for sending the reference signals by the plurality of terminal devices are reduced. The other type of uplink signal is an analog signal, and the analog signal indicates M elements in a first matrix for a terminal device that sends the analog signal. The terminal device does not feed back the first matrix to the network device by using a digital signal, which helps avoid a quantization loss caused by quantization of the first matrix by the terminal device.
In a possible implementation, the determining a downlink precoding matrix based on the second uplink signals includes: determining a first channel matrix based on the plurality of uplink signals; and performing singular value decomposition or eigenvalue decomposition on the first channel matrix to obtain the downlink precoding matrix, or performing singular value decomposition or eigenvalue decomposition on a covariance matrix of the first channel matrix to obtain the downlink precoding matrix.

In this implementation, the network device may directly determine, by combining the plurality of uplink signals, a channel matrix (for example, the first channel matrix) corresponding to the plurality of terminal devices. The first channel matrix is equivalent to a sum of channel matrices for the plurality of terminal devices. Then, the network device determines the downlink precoding matrix based on the first channel matrix. The network device does not need to separately determine the channel matrices, the downlink precoding matrices, and the like for the plurality of terminal devices, so that the process of determining the downlink precoding matrix is simplified. In addition, because the network device determines the downlink precoding matrix by combining the uplink signals of the plurality of terminal devices, the determined downlink precoding matrix can be better applicable to the plurality of terminal devices.

In a possible implementation, respective M elements indicated by any two of the plurality of uplink signals are at same M locations in first matrices.

In this implementation, respective M elements reported by the plurality of terminal devices are at same M locations in first matrices for the plurality of terminal devices. The plurality of terminal devices each may report only M elements, and do not need to separately report M locations. This helps reduce an amount of data reported by the terminal device. In addition, because the plurality of terminal devices report the respective M elements at the same locations, the process in which the network device determines, based on the M elements corresponding to each of the plurality of terminal devices, the downlink precoding matrix shared by the plurality of terminal devices is simplified.

In a possible implementation, the determining a downlink precoding matrix based on the plurality of uplink signals includes: determining M summation results based on the plurality of uplink signals, where each summation result is a sum of a plurality of elements, the plurality of elements are in one-to-one correspondence with the plurality of uplink signals, each of the plurality of elements is one of M elements indicated by a corresponding uplink signal, and any two of the plurality of elements are at same locations in first matrices respectively corresponding to the two elements; and determining the downlink precoding matrix based on the M summation results and the M locations.

In this implementation, the network device may determine the downlink precoding matrix based on the M summation results. This provides a manner in which the network device determines the downlink precoding matrix. In this implementation, the network device does not need to separately determine the channel matrices, the downlink precoding matrices, and the like for the plurality of terminal devices, so that the process in which the network device determines the downlink precoding matrix is simplified.

In a possible implementation, the method further includes: receiving first indication information from a first terminal device, where the first indication information indicates the M locations, and the first terminal device is one of the plurality of terminal devices.

In this implementation, one terminal device (for example, the first terminal device) in the plurality of terminal devices may determine the M locations, and indicate the M locations to the network device, and the network device does not need to determine the M locations, so that processing of the network device can be reduced.

In a possible implementation, the method further includes: sending first indication information to the plurality of terminal devices, where the first indication information indicates the M locations.

In this implementation, the network device may determine the M locations, and indicate the M locations to the plurality of terminal devices, so that the plurality of terminal devices each send the M elements at the M locations to the network device.

In a possible implementation, each of the plurality of terminal devices corresponds to one second matrix. Each second matrix includes at least one zero element and/or at least one non-zero element. Each non-zero element is a combination coefficient. The combination coefficient is a combination coefficient of a spatial domain vector and a frequency domain vector. The M locations are determined based on locations of non-zero elements in a plurality of second matrices corresponding to the plurality of terminal devices.

In this implementation, for example, the network device may determine the second matrices for the plurality of terminal devices based on uplink reference signals from the plurality of terminal devices. For a same terminal device, a location of a non-zero element in a first matrix for the terminal device is the same as that of a non-zero element in a second matrix for the terminal device. Therefore, in this implementation, the network device may determine the M locations based on the locations of the non-zero elements in the second matrices for the plurality of terminal devices. This provides a manner in which the network device determines the M locations. In addition, in this implementation, the network device determines the M locations, and the terminal device does not need to determine the M locations, so that processing of the terminal device is reduced.

In a possible implementation, the M locations are a union set of the locations of the non-zero elements in the plurality of second matrices corresponding to the plurality of terminal devices, or the M locations are an intersection set of the locations of the non-zero elements in the plurality of second matrices corresponding to the plurality of terminal devices.

In this implementation, the network device may use the intersection set or the union set of the locations of the non-zero elements in the plurality of second matrices as the M locations. In this way, the M locations can include the locations of the non-zero elements in the plurality of second matrices as much as possible, and the plurality of terminal devices report non-zero elements in the first matrices for the plurality of terminal devices as much as possible, so that the network device can obtain, as much as possible, valid information (the non-zero elements) in the plurality of first matrices corresponding to the plurality of terminal devices, to help determine the downlink precoding matrix more accurately.

In a possible implementation, the method further includes: determining at least one power control parameter based on channel quality of some or all of the plurality of terminal devices, where the at least one power control parameter corresponds to at least one of the plurality of terminal devices, each power control parameter in the at least one power control parameter is a power control parameter configured for one terminal device in the at least one terminal device, and the power control parameter is used to determine a power for sending the uplink signal.

In this implementation, the network device may determine a power control parameter of each terminal device in the at least one terminal device with reference to the channel quality of some or all of the plurality of terminal devices, so that each of the plurality of terminal devices sends the uplink signal at a more appropriate power. In addition, the power at which the terminal device sends the uplink signal affects a power at which the network device receives the uplink signal, so that adjusting powers at which the plurality of terminal devices send the uplink signals helps improve applicability of the downlink precoding matrix subsequently determined by the network device to the plurality of terminal devices.

In a possible implementation, one power control parameter in the at least one power control parameter includes an expected power and/or a power difference. The expected power is a power at which the network device expects a terminal device corresponding to the one power control parameter to send an uplink signal, or a power at which the network device expects to receive an uplink signal sent by a terminal device corresponding to the one power control parameter. The power difference is a difference between powers at which the terminal device corresponding to the one power control parameter sends the uplink signal twice.

In this implementation, a plurality of possible implementations of the power control parameter are provided, so that there are more possibilities for the power control parameter.

In a possible implementation, the method further includes: separately sending first information to the at least one terminal device, where the first information indicates the power control parameter corresponding to the terminal device that receives the first information.

In a possible implementation, the method further includes: separately sending first data to the plurality of terminal devices based on the downlink precoding matrix, where a same modulation and coding scheme is used to send the first data to the plurality of terminal devices.

In this implementation, the plurality of terminal devices share one downlink precoding matrix, so that overheads of the downlink precoding matrix are reduced. In addition, the plurality of terminal devices share one modulation and coding scheme, so that overheads of the modulation and coding scheme are reduced.

In a possible implementation, the method further includes: receiving response information from the first terminal device, where the response information indicates whether a second terminal device successfully receives the first data, or indicates whether all the plurality of terminal devices successfully receive the first data, and the second terminal device is one of the plurality of terminal devices.

In this implementation, one terminal device (for example, the first terminal device) may feed back response information for the first data to the network device, and the plurality of terminal devices do not need to separately send response information to the network device. This helps reduce a quantity of interactions between the terminal device and the network device.

In a possible implementation, channel quality of the second terminal device is less than or equal to a first threshold.

In this implementation, the first terminal device may feed back, to the network device, response information for the second terminal device whose channel quality is low, to reduce a quantity of bits occupied by the response information fed back by the first terminal device.

In a possible implementation, the method further includes: sending second indication information to the first terminal device, where the second indication information indicates the first terminal device to send the response information to the network device.

In this implementation, the network device may flexibly specify one terminal device (for example, the first terminal device) to feed back response information.

In a possible implementation, the method further includes: determining that a channel correlation between any two of the plurality of terminal devices is greater than or equal to a second threshold.

In this implementation, the network device may select a plurality of terminal devices with a high channel correlation, and determine one downlink precoding matrix shared by the plurality of terminal devices, so that the downlink precoding matrix is applicable to the plurality of terminal devices.

In a possible implementation, the method further includes: determining that data to be transmitted to the plurality of terminal devices corresponds to a same application.

In this implementation, the network device may select the plurality of terminal devices to correspond to the same application, and determine one downlink precoding matrix shared by the plurality of terminal devices, so that the network device sends same data to the plurality of terminal devices.

According to a second aspect, an embodiment of this application provides a communication method. The method may be performed by a network device, or may be performed by a chip system. The chip system may implement a function of the network device. For ease of description, the following uses an example in which the method is performed by the network device. The method includes: receiving a downlink precoding indicator from a first terminal device, where the downlink precoding indicator indicates a downlink precoding matrix; and sending first data to a plurality of terminal devices based on the downlink precoding matrix, where the plurality of terminal devices include the first terminal device.

In this embodiment of this application, the first terminal device determines the downlink precoding indicator, and the network device may obtain the downlink precoding matrix based on the downlink precoding indicator, so that processing of the network device is reduced and simplified. In addition, the plurality of terminal devices share one downlink precoding matrix, which helps reduce precoding matrix overheads.

According to a third aspect, an embodiment of this application provides a communication method. The method may be performed by a terminal device, or may be performed by a chip system. The chip system may implement a function of the terminal device. For ease of description, the following uses an example in which the method is performed by a first terminal device. The method includes: sending a first uplink signal sequence to a network device, where the first uplink signal sequence occupies a plurality of resource elements in frequency domain; and sending a second uplink signal sequence to the network device, where the second uplink signal sequence occupies a plurality of resource elements in frequency domain, a phase difference between the first uplink signal sequence and the second uplink signal sequence on resource elements with a same index value is not $2n\pi$, n is an integer, a difference between a phase difference of the first uplink signal sequence on a resource element with a first index value and a resource element with a second index value and a phase difference of the second uplink signal sequence on a resource element with the first index value and a resource element with the second index value is $2m\pi$, and m is an integer.

In this implementation, because phases of the first uplink signal sequence and the second uplink signal sequence that are sent by the first terminal device are variable, phases of uplink signal sequences that are of a plurality of terminal devices and that are received by the network device are also variable. This helps the network device improve accuracy of determining a covariance matrix of a channel matrix shared by the plurality of terminal devices, and helps the network device determine a more accurate downlink precoding matrix.

In a possible implementation, the method further includes: receiving first information from the network device, where the first information indicates a power control parameter of the first terminal device, and the power control parameter is used to determine a power at which the first terminal device sends the first uplink signal sequence and/or the second uplink signal sequence.

In this implementation, the first terminal device may determine, based on the power control parameter indicated by the network device, the power for sending the first uplink signal sequence and/or the second uplink signal sequence, which helps the first terminal device successfully send the first uplink signal sequence and/or the second uplink signal sequence.

According to a fourth aspect, an embodiment of this application provides a communication method. The method may be performed by a terminal device, or may be performed by a chip system. The chip system may implement a function of the terminal device. For ease of description, the following uses an example in which the method is performed by a first terminal device. The method includes: determining M elements in a first matrix corresponding to the first terminal device, where the M elements are at M locations in the first matrix, the M locations are different, the first matrix includes at least one zero element and/or at least one non-zero element, each non-zero element is a combination coefficient, the combination coefficient is a combination coefficient of a spatial domain vector and a frequency domain vector, and M is a positive integer; and sending a first uplink signal to a network device on a first resource, where the first uplink signal is an analog signal, and the first uplink signal indicates the M elements.

In this embodiment of this application, the first terminal device may report the M elements in the first matrix for the first terminal device by using the analog signal. The first terminal device may not need to report all elements in the first matrix, which helps reduce a reporting amount of the first terminal device. In addition, the M elements are reported by using the analog signal instead of a digital signal, so that a quantization loss caused by quantization of the M elements by the first terminal device is avoided.

In a possible implementation, the method further includes: receiving first indication information from the network device or another terminal device, where the first indication information indicates the M locations, and the another terminal device is a terminal device other than the first terminal device in a plurality of terminal devices.

In a possible implementation, the method further includes: receiving a location of a non-zero element in a first matrix from each terminal device in another terminal device, where the another terminal device is a terminal device other than the first terminal device in a plurality of terminal devices, and each of the plurality of terminal devices corresponds to one first matrix; and determining the M locations based on locations of non-zero elements in a plurality of first matrices corresponding to the plurality of terminal devices.

In this implementation, the first terminal device may receive a non-zero element in a first matrix and a location of the non-zero element from the another terminal device, to determine the M locations based on the locations of the non-zero elements in the first matrices for the plurality of terminal devices. This provides a manner in which the first terminal device determines the M locations.

In a possible implementation, the method further includes: The first terminal device sends first indication information to the another terminal device and/or the network device, where the first indication information indicates the M locations.

According to a fifth aspect, an embodiment of this application provides a communication method. The method may be performed by any terminal device, or may be performed by a chip system. The chip system may implement a function of the terminal device. For ease of description, the following uses an example in which the method is performed by a first terminal device. The method includes: determining M summation results, where each summation result is a sum of a plurality of elements, the plurality of elements are in one-to-one correspondence with a plurality of first matrices, each of the plurality of elements is one of M elements in a corresponding first matrix, the M elements are at M locations in the corresponding first matrix, the M locations are different, any two of the plurality of elements are at same locations in first matrices respectively corresponding to the two elements, each of the plurality of first matrices corresponds to one of a plurality of terminal devices, each first matrix includes at least one zero element and/or at least one non-zero element, each non-zero element is a combination coefficient, the combination coefficient is a combination coefficient of a spatial domain vector and a frequency domain vector, and M is a positive integer; and sending a precoding matrix indicator to a network device, where the precoding matrix indicator is determined based on the M summation results, the precoding matrix indicator indicates a downlink precoding matrix, and the downlink precoding matrix is used to send data.

In this embodiment of this application, a mechanism in which the network device obtains the downlink precoding matrix shared by the plurality of terminal devices is provided. In the mechanism, the first terminal device may determine, based on the M summation results, the downlink precoding indicator that indicates the downlink precoding matrix, and the network device may obtain the downlink precoding matrix based on the downlink precoding indicator, so that processing of the network device is simplified. In addition, the plurality of terminal devices may share one downlink precoding matrix, which helps reduce precoding matrix overheads.

In a possible implementation, the method further includes: receiving second information from each terminal device in another terminal device, where the second information indicates a non-zero element in a first matrix corresponding to the terminal device that sends the second information and a location of the non-zero element, the another terminal device is a terminal device other than the first terminal device in the plurality of terminal devices, and the M locations are determined based on locations of non-zero elements in the plurality of first matrices; or receiving third information from each terminal device in another terminal device, where the third information indicates M elements in a first matrix corresponding to the terminal device that sends the third information, the another terminal device is a terminal device other than the first terminal device in the plurality of terminal devices, and respective M elements corresponding to any two of the plurality of terminal devices are at same M locations in first matrices respectively corresponding to the two terminal devices.

In this implementation, the another terminal device may send, to the first terminal device, the non-zero element in the corresponding first matrix and the location of the non-zero element, so that the first terminal device may determine the M locations and the M summation results. Alternatively, the first terminal device and the another terminal device obtain the M locations in advance, and the another terminal device may send only the M elements at the M locations to the first terminal device, so that the first terminal device may determine the M summation locations based on the M elements at the M locations sent by the another terminal device. This can reduce an amount of data sent by the another terminal device to the first terminal device.

In a possible implementation, the method includes: receiving first data from the network device; and sending response information to the network device, where the response information indicates whether a second terminal device successfully receives the first data, or indicates whether all the plurality of terminal devices successfully receive the first data, and the second terminal device is one of the plurality of terminal devices.

In a possible implementation, channel quality of the second terminal device is less than or equal to a first threshold.

In a possible implementation, the method further includes: receiving second indication information from the network device, where the second indication information indicates the first terminal device to send the response information to the network device.

According to a sixth aspect, an embodiment of this application provides a communication apparatus. The communication apparatus may be the network device in the first aspect, an electronic device (for example, a chip system) configured in the network device, or a large device including the network device. The communication apparatus includes a corresponding means (means) or module configured to perform the first aspect or any optional implementation. For example, the communication apparatus includes a transceiver module (also referred to as a transceiver unit sometimes) and a processing module (also referred to as a processing unit sometimes).

For example, the transceiver module is configured to receive a plurality of uplink signals from a plurality of terminal devices on a first resource, where each uplink signal is from one of the plurality of terminal devices. The processing module is configured to determine a downlink precoding matrix based on the plurality of uplink signals, where the downlink precoding matrix is used to send data to the plurality of terminal devices.

According to a seventh aspect, an embodiment of this application provides a communication apparatus. The communication apparatus may be the network device in the second aspect, an electronic device (for example, a chip system) configured in the network device, or a large device including the network device. The communication apparatus includes a corresponding means (means) or module configured to perform the second aspect or any optional implementation. For example, the communication apparatus includes a transceiver module (also referred to as a transceiver unit sometimes) and a processing module (also referred to as a processing unit sometimes).

For example, the transceiver module is configured to receive a downlink precoding indicator from a first terminal device, where the downlink precoding indicator indicates a downlink precoding matrix. The processing module is configured to send first data to a plurality of terminal devices based on the downlink precoding matrix, where the plurality of terminal devices include the first terminal device.

According to an eighth aspect, an embodiment of this application provides a communication apparatus. The communication apparatus may be the terminal device in the third aspect, an electronic device (for example, a chip system) configured in the terminal device, or a large device including the terminal device. The communication apparatus includes a corresponding means (means) or module configured to perform the third aspect or any optional implementation. For example, the communication apparatus includes a transceiver module (also referred to as a transceiver unit sometimes) and a processing module (also referred to as a processing unit sometimes).

For example, the transceiver module is configured to: send a first uplink signal sequence to a network device under control of the processing module, where the first uplink signal sequence occupies a plurality of resource elements in frequency domain; and send a second uplink signal sequence to the network device, where the second uplink signal sequence occupies a plurality of resource elements in frequency domain, a phase difference between the first uplink signal sequence and the second uplink signal sequence on resource elements with a same index value is not $2n\pi$, n is an integer, a difference between a phase difference of the first uplink signal sequence on a resource element with a first index value and a resource element with a second index value and a phase difference of the second uplink signal sequence on a resource element with the first index value and a resource element with the second index value is $2m\pi$, and m is an integer.

According to a ninth aspect, an embodiment of this application provides a communication apparatus. The communication apparatus may be the terminal device in the fourth aspect, an electronic device (for example, a chip system) configured in the terminal device, or a large device including the terminal device. The communication apparatus includes a corresponding means (means) or module configured to perform the fourth aspect or any optional implementation. For example, the communication apparatus includes a transceiver module (also referred to as a transceiver unit sometimes) and a processing module (also referred to as a processing unit sometimes).

For example, the processing module is configured to determine M elements in a first matrix corresponding to a first terminal device, where the M elements are at M locations in the first matrix, the M locations are different, the first matrix includes at least one zero element and/or at least one non-zero element, each non-zero element is a combination coefficient, the combination coefficient is a combination coefficient of a spatial domain vector and a frequency domain vector, and M is a positive integer. The transceiver module is configured to send a first uplink signal to a network device on a first resource, where the first uplink signal is an analog signal, and the first uplink signal indicates the M elements.

According to a tenth aspect, an embodiment of this application provides a communication apparatus. The communication apparatus may be the terminal device in the fifth aspect, an electronic device (for example, a chip system) configured in the terminal device, or a large device including the terminal device. The communication apparatus includes a corresponding means (means) or module configured to perform the fifth aspect or any optional implementation. For example, the communication apparatus includes a transceiver module (also referred to as a transceiver unit sometimes) and a processing module (also referred to as a processing unit sometimes).

For example, the processing module is configured to determine M summation results, where each summation result is a sum of a plurality of elements, the plurality of elements are in one-to-one correspondence with a plurality of first matrices, each of the plurality of elements is one of M elements in a corresponding first matrix, the M elements are at M locations in the corresponding first matrix, the M locations are different, any two of the plurality of elements are at same locations in first matrices respectively corresponding to the two elements, each of the plurality of first matrices corresponds to one of a plurality of terminal devices, each first matrix includes at least one zero element and/or at least one non-zero element, each non-zero element is a combination coefficient, the combination coefficient is a combination coefficient of a spatial domain vector and a frequency domain vector, and M is a positive integer. The transceiver module is configured to send a precoding matrix indicator to a network device, where the precoding matrix indicator is determined based on the M summation results, the precoding matrix indicator indicates a downlink precoding matrix, and the downlink precoding matrix is used to send data.

According to an eleventh aspect, an embodiment of this application provides a communication system. The communication system includes the apparatus in the sixth aspect and the apparatus in the eighth aspect.

According to a twelfth aspect, an embodiment of this application provides a communication system. The communication system includes the apparatus in the sixth aspect and the apparatus in the ninth aspect.

According to a thirteenth aspect, an embodiment of this application provides a communication system. The communication system includes the apparatus in the seventh aspect and the apparatus in the tenth aspect.

According to a fourteenth aspect, an embodiment of this application provides a communication apparatus, including a processor and a communication interface. The communication interface is configured to: receive a signal from a communication apparatus other than the communication apparatus and transmit the signal to the processor, or send a signal from the processor to a communication apparatus other than the communication apparatus. The processor is configured to implement the method according to any one of the first aspect, the second aspect, the third aspect, the fourth aspect, or the fifth aspect by using a logic circuit or executing code instructions.

Optionally, the communication apparatus further includes another component, for example, an antenna, an input/output module, and a memory. Such components may be hardware, software, or a combination of software and hardware.

According to a fifteenth aspect, an embodiment of this application provides a chip system. The chip system includes a processor and an interface. The processor is configured to invoke instructions from the interface and run the instructions. When the processor executes the instructions, the method according to any one of the first aspect, the second aspect, the third aspect, the fourth aspect, or the fifth aspect is implemented.

According to a sixteenth aspect, an embodiment of this application provides a computer-readable storage medium. The computer-readable storage medium is configured to store a computer program or instructions. When the computer program or the instructions are run, the method according to any one of the first aspect, the second aspect, the third aspect, the fourth aspect, or the fifth aspect is implemented.

According to a seventeenth aspect, an embodiment of this application provides a computer program product including instructions. When the computer program product is run on a computer, the method according to any one of the first aspect, the second aspect, the third aspect, the fourth aspect, or the fifth aspect is implemented.

For beneficial effects of the sixth aspect to the seventeenth aspect, refer to the beneficial effects described in the first aspect to the fifth aspect. Details are not described herein again.

## BRIEF DESCRIPTION OF DRAWINGS

FIG. 1 is a diagram of an application scenario according to an embodiment of this application;
FIG. 2 is a schematic flowchart of a communication method according to an embodiment of this application;
FIG. 3 is a diagram of antenna structures of a UE and a network device according to an embodiment of this application;
FIG. 4 is a diagram of a third spatial-frequency combination coefficient matrix according to an embodiment of this application;
FIG. 5 is a schematic flowchart of another communication method according to an embodiment of this application;
FIG. 6 is an example diagram in which a plurality of UEs send uplink reference signals according to an embodiment of this application;
FIG. 7 is a schematic flowchart of still another communication method according to an embodiment of this application;
FIG. 8 is a schematic flowchart of yet another communication method according to an embodiment of this application; and
FIG. 9 and FIG. 10 are diagrams of structures of two communication apparatuses according to an embodiment of this application.

## DESCRIPTION OF EMBODIMENTS

To make objectives, technical solutions, and advantages of embodiments of this application clearer, the following further describes embodiments of this application in detail with reference to the accompanying drawings.

For ease of understanding, the following describes technical terms in embodiments of this application. It should be understood that related descriptions of the following technical terms are merely examples for ease of understanding, and are not intended to limit the protection scope of embodiments of this application.

1. Massive multiple input multiple output (massive multiple input multiple output, massive MIMO): is an extended MIMO technology. Massive MIMO is a key technology for improving system throughput and spectrum utilization in 5th generation (5th generation, 5G) mobile communication. In massive MIMO, a sending device and a receiving device each include a plurality of antennas. The plurality of antennas of the sending device each may independently send a signal. In addition, the receiving device may also receive and restore a signal via the plurality of antennas.

2. Precoding technology: When a channel status is given, a sending device (for example, a network device) may precode a to-be-sent signal based on a precoding matrix that matches the channel status, so that a precoded to-be-sent signal adapts to a channel, and a receiving device (for example, a terminal device) eliminates inter-channel impact with less complexity. Therefore, precoding the to-be-sent signal can improve signal quality of a signal received by the receiving device (for example, the terminal device). The signal quality is measured, for example, by using a parameter such as a signal to interference plus noise ratio (signal to interference plus noise ratio, SINR). In massive MIMO, the signal is received via a plurality of antennas of the receiving device, which requires high signal quality of the signal received by the receiving device, or a receiving failure is likely to occur. The precoding technology helps improve the signal quality of the signal received by the receiving device. Therefore, using the precoding technology helps implement massive MIMO. It should be noted that unless otherwise specified, a channel matrix in embodiments of this application may be an uplink channel matrix, or may be a downlink channel matrix.

3. Frequency domain unit: is a unit of a frequency domain resource for a device (for example, a terminal device), and may be understood as a granularity of the frequency domain resource. For example, a frequency domain length of the frequency domain unit is, for example, a times a frequency domain length of a subband (subband), a frequency domain length of a resource block (resource block, RB), b times a frequency domain length of a resource element (resource element, RE), a frequency domain length of a subcarrier, a frequency domain length of a resource block group (resource block group, RBG), or a frequency domain length of a precoding resource block group (precoding resource block group, PRG), where $a \leq 1$, for example, a value of a is 1 or 1/2, and b is a positive integer. The frequency domain length of the subband is not fixed. The frequency domain length of the subband may be equal to a frequency domain length of one or more RBs.

4. Spatial layer: In MIMO, a spatial layer may be considered as a data stream that can be independently transmitted, a polarization direction of a transmit antenna, or a logical channel. To improve spectrum resource utilization and improve a data transmission capability of a communication system, a network device may transmit data to a terminal device via a plurality of spatial layers.

A quantity of spatial layers is less than or equal to a rank of a channel matrix. For example, the terminal device may determine the quantity of spatial layers based on the channel matrix, to further determine a precoding matrix. It should be noted that unless otherwise specified, the channel matrix in embodiments of this application may be an uplink channel matrix, or may be a downlink channel matrix.

5. Precoding matrix: may be determined based on a channel matrix. For example, the precoding matrix may be obtained by performing singular value decomposition (singular value decomposition, SVD) on the channel matrix or a covariance matrix of the channel matrix, or may be obtained by performing eigenvalue decomposition (eigenvalue decomposition, EVD) on a covariance matrix of the channel matrix.

The channel matrix may be determined by performing channel estimation based on a reference signal. For example, the channel matrix is determined according to the following formula (1):

$$H = YX^{-1} \tag{1}$$

H represents the channel matrix. X represents the reference signal sent by a sending device to a receiving device. $X^{-1}$ represents an inverse matrix of the reference signal. Y represents a signal that corresponds to the reference signal and that is actually received by the receiving device.

Alternatively, for example, a channel matrix of one of an uplink channel or a downlink channel is used as a channel matrix of the other of the uplink channel or the downlink channel based on reciprocity between the uplink channel and the downlink channel.

One precoding matrix may include one or more vectors, for example, a column vector. One precoding matrix may be used to determine one or more precoding vectors.

When there is one spatial layer and a transmit antenna has one polarization direction, a precoding matrix is a precoding vector.

Alternatively, when there are a plurality of spatial layers and a transmit antenna has one polarization direction, a precoding vector may be a component of a precoding matrix at one spatial layer.

Alternatively, when there is one spatial layer and a transmit antenna has a plurality of polarization directions, a precoding vector may be a component of a precoding matrix in one polarization direction.

Alternatively, when there are a plurality of spatial layers and a transmit antenna has a plurality of polarization directions, a precoding vector may be a component of a precoding matrix at one spatial layer and in one polarization direction.

It should be understood that the precoding vector may alternatively be determined by a vector in the precoding matrix, for example, obtained by performing mathematical transformation on the vector in the precoding matrix. A mathematical transformation relationship between the precoding matrix and the precoding vector is not limited in this application.

6. Spatial-frequency component matrix: is determined by one or more spatial domain vectors selected from a spatial domain vector (spatial domain vector) set and one or more frequency domain vectors selected from a frequency domain vector set. The spatial domain vector set and the frequency domain vector set may be configured in a device by using a protocol. In other words, the one or more selected spatial domain vectors and the one or more selected frequency domain vectors may construct one or more spatial-frequency component matrices, where one spatial domain vector and one frequency domain vector are referred to as a spatial-frequency vector pair.

7. Spatial-frequency matrix: may be understood as an intermediate quantity used to determine a precoding matrix or a channel matrix. For example, a terminal device may determine the spatial-frequency matrix by using the precoding matrix or the channel matrix. A network device may obtain the spatial-frequency matrix by performing weighted summation on a plurality of spatial-frequency component matrices, to restore the channel matrix or the precoding matrix.

Specifically, one or more selected spatial domain vectors may form a spatial domain matrix $\mathbf{W_1}$, where each column vector in $\mathbf{W_1}$ corresponds to one selected spatial domain vector. One or more selected frequency domain vectors may form a frequency domain matrix $\mathbf{W_3}$, where each column vector in $\mathbf{W_3}$ corresponds to one selected frequency domain vector. A result of linear combination of the one or more selected spatial domain vectors and the one or more selected frequency domain vectors may be referred to as a spatial-frequency matrix K. A calculation formula for the spatial-frequency matrix K is as follows:

$$K = W1 \times \widetilde{W} \times W3^{H} \tag{2}$$

H represents conjugate transposition. $\tilde{\mathbf{W}}$ represents a spatial-frequency combination coefficient matrix.

For a spatial layer, $\tilde{\mathbf{W}}$ may represent a spatial-frequency combination coefficient matrix including a plurality of spatial-frequency combination coefficients. A row in the spatial-frequency combination coefficient matrix may correspond to a spatial domain vector in a polarization direction, and a column in the spatial-frequency combination coefficient matrix may correspond to a frequency domain vector.

Optionally, in a frequency domain vector and a spatial domain vector that correspond to each of a plurality of spatial layers, a location of a spatial-frequency vector pair selected to construct the precoding matrix corresponds to a location of a combination coefficient (which may also be referred to as a non-zero coefficient or a spatial-frequency combination coefficient) for each spatial-frequency vector pair.

The location of the spatial-frequency vector pair used to construct the precoding matrix is specifically a location of a spatial domain vector used to construct the precoding matrix among spatial domain vectors reported by the terminal device and a location of a frequency domain vector used to construct the precoding matrix among frequency domain vectors reported by the terminal device. Because each spatial-frequency vector pair corresponds to a combination coefficient, the location of the spatial-frequency vector pair used to construct the precoding matrix is also a location of a non-zero coefficient.

For example, the spatial-frequency matrix $\mathbf{K}$ may be specifically represented as $\mathbf{K} = [\mathbf{w_0}, \mathbf{w_1} ... \mathbf{w_{N-1}}]$. $\mathbf{w_0}$ to $\mathbf{w_{N-1}}$ are $N_f$ column vectors corresponding to $N_f$ frequency domain units. Each column vector may be a precoding matrix corresponding to each frequency domain unit, and a length of each column vector may be $N_s$. The $N_f$ column vectors correspond to precoding vectors for the $N_f$ frequency domain units. In other words, the spatial-frequency matrix may be considered as a joint matrix formed by combining the precoding vectors corresponding to the $N_f$ frequency domain units.

Optionally, the spatial-frequency matrix may correspond to a spatial layer. Because the terminal device may feed back a frequency domain vector, a spatial domain vector, and a combination coefficient based on each spatial layer, to determine a spatial-frequency matrix, it may be considered that the spatial-frequency matrix corresponds to the spatial layer. The network device determines a spatial-frequency matrix based on a frequency domain vector, a spatial domain vector, and a combination coefficient that are for a spatial layer and that are fed back by the terminal device. This is equivalent to that the network device determines a spatial-frequency matrix corresponding to the spatial layer. The spatial-frequency matrix corresponding to the spatial layer may be directly used to determine the precoding matrix corresponding to each frequency domain unit. For example, a precoding matrix corresponding to a frequency domain unit may be constructed by using column vectors that correspond to the same frequency domain unit and that are in spatial-frequency matrices corresponding to the spatial layers. In this case, for a manner of calculating precoding matrices corresponding to the $N_f$ frequency domain units for a sending device, refer to the foregoing formula (2).

For example, $n^{th}$ ($0 \leq n \leq N_3-1$, and n is an integer) column vectors in the spatial-frequency matrices corresponding to the spatial layers are extracted, and are arranged from left to right in a sequence of the spatial layers, to obtain a matrix whose dimension is $N_s \times Z$, where Z represents a quantity of spatial layers, $Z \geq 1$, and Z is an integer. A precoding matrix for an $n^{th}$ frequency domain unit may be obtained by performing normalization processing on the matrix, for example, multiplying the matrix by a power normalization coefficient.

It should be understood that the spatial-frequency matrix is merely a representation form of the intermediate quantity used to determine the precoding matrix or the channel matrix, and should not constitute any limitation on embodiments of this application. For example, the column vectors in the spatial-frequency matrix are successively arranged head to end from left to right, or are arranged according to another predefined rule, to obtain a vector whose length is $N_s \times N_f$. The vector may be referred to as a spatial-frequency vector.

It should be further understood that the dimensions of the spatial-frequency matrix and the spatial-frequency vector shown above are merely examples, and should not constitute any limitation on embodiments of this application. For example, the spatial-frequency matrix may also be a matrix whose dimension is $N_f \times N_s$. Each row vector may correspond to a frequency domain unit, and is used to determine a precoding vector for the corresponding frequency domain unit.

In addition, when a transmit antenna of the sending device is configured with a plurality of polarization directions, the dimension of the spatial-frequency matrix may further be extended. For example, for a dual-polarized antenna, the dimension of the spatial-frequency matrix may be $2N_s \times N_f$ or $N_f \times 2N_s$. It should be understood that a quantity of polarization directions of the transmit antenna is not limited in embodiments of this application.

8. Antenna port: may be referred to as a port, and may be understood as a transmit antenna identified by a receiving device, or a transmit antenna that may be distinguished spatially. One antenna port may be preconfigured for each virtual antenna, and each virtual antenna may be a weighted combination of a plurality of physical antennas. When an antenna port is used to send a reference signal, the antenna port may also be referred to as a port for the reference signal. For example, an antenna port is used to send a sounding reference signal (sounding reference signal, SRS), and the antenna port may be referred to as an SRS port. In embodiments of this application, the reference signal may be a non-precoded reference signal, or may be a precoded reference signal. This is not limited in embodiments of this application.

9. Spatial domain vector: may also be referred to as a spatial domain component vector, a beam (beam) vector, a spatial domain beam base vector, a spatial domain base vector, a spatial domain base, or the like. Each element in the spatial domain vector may represent a weight of each antenna port (antenna port) of a sending device. A receiving device may perform linear superposition on signals of the antenna ports of the sending device based on the weights that are of the antenna ports and that are represented by the elements in the spatial domain vector, so that an area with a strong signal can be formed in a specific direction in space.

Optionally, the spatial domain vector is, for example, a discrete fourier transform (discrete fourier transform, DFT) vector. The DFT vector may be a vector in a DFT matrix.

10. Frequency domain vector (frequency domain vector): may also be referred to as a frequency domain component vector, a frequency domain base vector, a frequency domain base, or the like, and may be used to represent a change rule of a channel in frequency domain. Each frequency domain vector may represent one change rule. A terminal device may correspond to same or different frequency domain vectors at different spatial layers.

11. Spatial-frequency combination coefficient matrix: may also be referred to as a spatial-frequency joint coefficient matrix, a weighting coefficient matrix, or the like. The spatial-frequency combination coefficient matrix includes at least one element, and each element in the at least one element is a non-zero element or a zero element. Each non-zero element may be referred to as a combination coefficient (which may also be referred to as a non-zero coefficient or a spatial-frequency combination coefficient). A spatial-frequency combination coefficient in the spatial-frequency combination coefficient matrix corresponds to a spatial domain vector and a frequency domain vector. For example, a non-zero element in the spatial-frequency combination coefficient matrix may be a combination coefficient corresponding to a spatial-frequency vector pair including an $i^{th}$ spatial domain vector and a $j^{th}$ frequency domain vector.

For ease of differentiation, in embodiments of this application, a spatial-frequency combination coefficient matrix determined by a terminal device based on a downlink signal (for example, an uplink reference signal) is referred to as a first matrix (which may also be referred to as a first spatial-frequency combination coefficient matrix or a downlink spatial-frequency combination coefficient matrix). A frequency domain vector corresponding to the first spatial-frequency combination coefficient matrix may also be referred to as a downlink frequency domain vector or a first frequency domain vector. A spatial domain vector corresponding to the first matrix may also be referred to as a downlink spatial domain vector or a first spatial domain vector. Similarly, a spatial-frequency combination coefficient matrix determined by a network device (for example, a base station) based on an uplink signal may be referred to as a second matrix (which may also be referred to as a second spatial-frequency combination coefficient matrix or an uplink spatial-frequency combination coefficient matrix). A frequency domain vector corresponding to the second matrix may also be referred to as an uplink frequency domain vector or a second frequency domain vector. A spatial domain vector corresponding to the second matrix may also be correspondingly referred to as an uplink spatial domain vector or a second spatial domain vector.

12. Precoding matrix indicator (precoding matrix indicator, PMI): may be used to determine a precoding matrix. For example, a terminal device may determine a precoding matrix, and indicate the precoding matrix to a network device by using a PMI, and the network device may restore a precoding matrix based on the PMI. The precoding matrix restored by the network device may be the same as or approximate to the precoding matrix determined by the terminal device.

In downlink channel measurement, a higher degree of approximation between the precoding matrix determined by the network device based on the PMI and the precoding matrix determined by the terminal device indicates that the precoding matrix determined by the network device based on the PMI is more adaptive to a downlink channel, so that signal transmission quality can be improved.

It should be understood that the PMI is merely a name, and should not constitute any limitation on embodiments of this application. Embodiments of this application do not preclude a possibility of defining information with another name for a same or similar function in a future protocol.

13. Terminal device: is a device having a wireless transceiver function, and may be a fixed device, a mobile device, a handheld device, a wearable device, a vehicle-mounted device, or a wireless apparatus (for example, a communication module or a chip system) built in the foregoing device. The terminal device is configured to connect a person, an object, a machine, and the like, and may be widely used in various scenarios, for example, including but not limited to the following scenarios: cellular communication, device-to-device (device-to-device, D2D) communication, vehicle-to-everything (vehicle-to-everything, V2X), machine-to-machine/machine type communication (machine-to-machine/machine type communication, M2M/MTC), internet of things (internet of things, IoT), virtual reality (virtual reality, VR), augmented reality (augmented reality, AR), industrial control (industrial control), self driving (self driving), remote medical (remote medical), a smart grid (smart grid), smart furniture, a smart office, a smart wearable, smart transportation, a smart city (smart city), an uncrewed aerial vehicle, and a robot, and the like. The terminal device may be sometimes referred to as a user equipment (user equipment, UE), a customer premises equipment (customer premises equipment, CPE), a terminal, an access station, a UE station, a remote station, a wireless communication device, a user apparatus, or the like. In embodiments of this application, the terminal device is a UE for description.

14. Network device: includes, for example, an access network element (or referred to as an access network device) and/or a core network element (or referred to as a core network device).

The access network element is a device having a wireless transceiver function, and is configured to communicate with a UE. The access network element includes but is not limited to a base station (BTS, NodeB, eNodeB/eNB, or gNodeB/gNB) in the foregoing communication system, a transmission reception point (t(R)ANsmission reception point, TRP), a subsequent evolved base station in 3GPP, an access node in a wireless fidelity (wireless fidelity, Wi-Fi) system, a wireless relay node, a wireless backhaul node, and the like. The base station may be a macro base station, a micro base station, a picocell base station, a small cell, a relay station, or the like. A plurality of base stations may support networks of a same access technology mentioned above, or may support networks of different access technologies mentioned above. The base station may include one or more co-site or non-co-site transmission reception points. Alternatively, the network device may be a radio controller, a central unit (central unit, CU) that may also be referred to as an aggregation unit, and/or a distributed unit (distributed unit, DU) in a cloud radio access network (cloud radio access network, C(R)AN) scenario. Alternatively, the network device may be a server, a wearable device, a vehicle-mounted device, or the like. For example, a network device in a vehicle-to-everything V2X technology may be a road side unit (road side unit, RSU). The following provides descriptions by using an example in which the access network device is a base station. A plurality of network devices in the communication system may be base stations of a same type, or may be base stations of different types. The base station may communicate with the UE, or may communicate with the UE via a relay station. The UE may communicate with a plurality of base stations in different access technologies.

The core network element is configured to implement at least one of functions such as mobility management, data processing, session management, and policy and charging. Names of devices that implement core network functions in systems of different access technologies may be different. This is not limited in embodiments of this application. A 5G system is used as an example. The core network element includes an access and mobility management function (access and mobility management function, AMF), a session management function (session management function, SMF), a PCF, a user plane function (user plane function, UPF), or the like.

In embodiments of this application, an apparatus configured to implement a network device function may be a network device, or may be an apparatus, for example, a chip system, that can support the network device in implementing the function, where the apparatus may be installed in the network device. In the technical solutions provided in embodiments of this application, an example in which the apparatus configured to implement the network device function is a network device is used to describe the technical solutions provided in embodiments of this application.

In embodiments of this application, unless otherwise specified, a quantity of nouns represents "a singular noun or a plural noun", that is, "one or more". "At least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. The character "/" generally indicates an "or" relationship between the associated objects. For example, A/B indicates A or B. At least one of the following items (pieces) or a similar expression thereof indicates any combination of these items, including a single item (piece) or any combination of a plurality of items (pieces). For example, at least one of a, b, or c represents: a, b, c, a and b, a and c, b and c, or a, b, and c, where a, b, and c may be singular or plural.

Unless otherwise specified, ordinal numbers such as "first" and "second" mentioned in embodiments of this application are used to distinguish between a plurality of objects, and are not intended to limit a sequence, a time sequence, priorities, or importance degrees of the plurality of objects. For example, a "first uplink signal" and a "second uplink signal" in embodiments of this application are used to represent two signals, and do not limit types, a sending sequence, a receiving sequence, priorities, or the like of the two signals.

To simplify a process of determining precoding matrices for a plurality of UEs, an embodiment of this application provides a communication method. In the method, a network device may configure a same resource (for example, a first resource) for the plurality of UEs. The plurality of UEs may send uplink signals to the network device on the same resource. The network device may determine a downlink precoding matrix based on the uplink signals of the plurality of UEs. When sending data to the plurality of UEs, the network device may precode the data by using the downlink precoding matrix. In other words, the network device does not need to separately determine a precoding matrix for each UE, but determines one downlink precoding matrix shared by the plurality of UEs. This helps simplify the process in which the network device determines the precoding matrices for the plurality of UEs, and reduces resource overheads for calculating the precoding matrices by the network device.

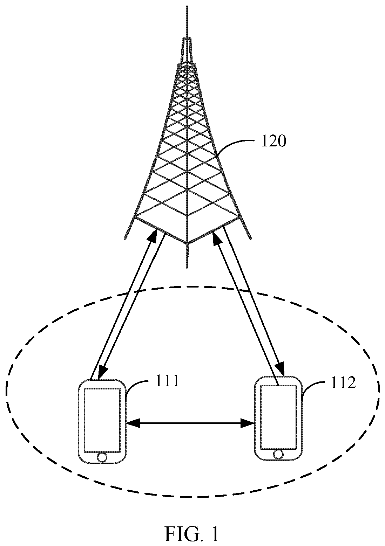

FIG. 1 is a diagram of an application scenario according to an embodiment of this application, or may be understood as a diagram of an architecture of a communication system according to an embodiment of this application. As shown in FIG. 1, the communication system includes a plurality of UEs and a network device 120 serving the plurality of UEs. In FIG. 1, an example in which the plurality of UEs include a first UE 111 and a second UE 112 is used. The network device 120 includes one or more antennas, and the one or more antennas included in the network device 120 may have one or more polarization directions. Similarly, a UE may include one or more antennas, and the one or more antennas included in the UE may have one or more polarization directions.

The first UE 111 may communicate with the network device 120. The second UE 112 may communicate with the network device 120.

In a possible implementation, the network device 120 may configure a UE group, or a UE group may be specified in a protocol. A UE group includes a plurality of UEs. For example, a UE group includes the first UE 111 and the second UE 112.

In an example, the network device 120 may send group information to the plurality of UEs in the UE group, where the group information indicates a group identifier of the UE group, which is equivalent to indicating a UE group to which a UE belongs. In this way, the network device 120 may perform multicast to the UE group by using the group identifier of the UE group.

Optionally, the group information further includes identifiers of all the UEs in the UE group. The group information includes the identifiers of all the UEs in the UE group. In this way, UEs in one UE group can communicate with each other. Optionally, any two UEs in the UE group may communicate with each other over a sidelink (sidelink, SL).

In an example, the network device 120 may update the UE group. Updating a UE group may include: The network device 120 increases or decreases a quantity of UEs included in the UE group, and/or the network device replaces an original UE in the UE group with a new UE.

For example, the network device 120 may update the UE group for one or more of reasons that the UE served by the network device 120 may change, an uplink channel for the UE may change, a downlink channel for the UE may change, a service performed by the UE may change, or the like.

When the network device 120 configures the UE group, in an example, the network device 120 may send data to the UE group in a multicast manner. Multicast in embodiments of this application may also be referred to as multicasting. Alternatively, the network device 120 may separately send data to the UEs in the UE group in a unicast manner.

To better describe embodiments of this application, the following describes methods provided in embodiments of this application with reference to the accompanying drawings. In the accompanying drawings corresponding to embodiments of this application, all optional steps are represented by dashed lines. The methods provided in embodiments of this application may be applied to the scenario shown in FIG. 1. A plurality of UEs in embodiments of this application include a first UE and a second UE. The first UE and the second UE in embodiments of this application are, for example, any UE in the scenario shown in FIG. 1. A network device in embodiments of this application is, for example, the network device 120 shown in FIG. 1.

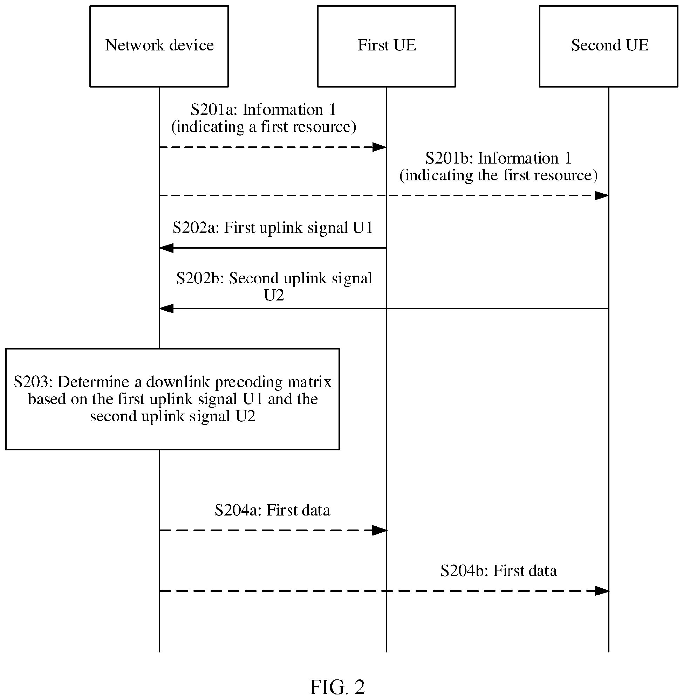

An embodiment of this application provides a communication method. FIG. 2 is a schematic flowchart of the method.

S201: A network device sends information 1. Correspondingly, a plurality of UEs receive the information 1. In FIG. 2, an example in which a first UE and a second UE receive the information 1 is used. The information 1 may indicate a first resource used to send an uplink signal. The information 1 may also be referred to as fourth information.

The network device may send the information 1 by using first signaling. The first signaling is, for example, higher layer signaling, and the higher layer signaling is, for example, radio resource control (radio resource control, RRC) signaling or a media access control (media access control, MAC) control element (control element, CE). Alternatively, the first signaling is, for example, physical layer signaling, and the physical layer signaling is, for example, downlink control information (downlink control information, DCI). A manner in which the network device sends the information 1 is not limited in this embodiment of this application.

The first resource indicated by the information 1 may be a semi-persistent scheduling (semi-persistent scheduling, SPS) resource. In other words, any one of the plurality of UEs may send an uplink signal to the network device for a plurality of times by using the first resource. Alternatively, the first resource indicated by the information 1 is a dynamically scheduled resource. In other words, any one of the plurality of UEs may send an uplink signal to the network device once by using the first resource. The first resource may include one or more of a time domain resource, a frequency domain resource, or a code domain resource. A unit of the time domain resource is, for example, a slot (slot), a frame (frame), a subframe (subframe), a mini-slot (mini-slot), an orthogonal frequency division multiplexing (orthogonal frequency division multiplexing, OFDM) symbol, or a transmission time interval (transmission time interval, TTI). A granularity of the frequency domain resource is, for example, a frequency domain unit. For a meaning of the frequency domain unit, refer to the foregoing descriptions.

In an example, the network device may separately send the information 1 to the first UE and the second UE in a unicast manner. In this case, S201 may include S201a and S201b. S201a is that the network device sends the information 1 to the first UE, and correspondingly, the first UE receives the information 1 from the network device. S201b is that the network device sends the information 1 to the second UE, and correspondingly, the second UE receives the information 1 from the network device.

S201a and S201b may be performed in any sequence. For example, S201a and S201b are performed at the same time, S201a is performed before S201b, or S201b is performed before S201a.

In another example, the first UE and the second UE belong to a same UE group, and the network device may send, in a multicast manner, the information 1 to the UE group to which the first UE and the second UE belong. For example, the first signaling may include an identifier of the UE group. This is equivalent to that the network device sends the information 1 to the first UE and the second UE.

The following describes an example of a manner in which the network device configures the UE group. In this embodiment of this application, an example in which the first UE and the second UE are configured in the same UE group is used for description.

Manner 1: The network device configures, in one UE group, UEs that are in the plurality of UEs and that perform a same service. In other words, UEs included in one UE group perform a same service.

That a UE performs a service may be understood as that the UE is currently configured to implement the service. The service includes, for example, extended reality (extended reality, XR), a network-based video live broadcast service, an online class, an online conference, or a cloud game. The XR service may include one or more of a virtual reality (virtual reality, VR) service, an augmented reality (augmented reality, AR) service, a mixed reality (mixed reality, MR) service, or the like.

For example, the network device determines that data to be sent to the first UE and the second UE corresponds to a same application, indicating that the first UE and the second UE need to perform a same service, and the network device may configure the first UE and the second UE in one UE group.

For example, the network device determines that data of a same application corresponding to the XR service needs to be sent to the first UE and the second UE, and the network device determines to configure the first UE and the second UE in one UE group.

Manner 2: The network device configures, in one UE group, UEs that are in the plurality of UEs and between which a channel correlation is greater than a first threshold. In other words, a channel correlation between any two UEs in the UE group is greater than the first threshold. A channel is, for example, an uplink channel or a downlink channel.

For example, the network device may determine a channel matrix for the first UE and a channel matrix for the second UE, and determine a correlation between the channel matrix for the first UE and the channel matrix for the second UE. For example, the network device determines a similarity between the channel matrix for the first UE and the channel matrix for the second UE as the correlation between the channel matrix for the first UE and the channel matrix for the second UE. If a channel correlation between the first UE and the second UE is greater than the first threshold, the network device may configure the first UE and the second UE in one UE group.

The network device may determine the channel matrix for the first UE and the channel matrix for the second UE in a same manner. An example in which the network device determines the channel matrix for the first UE is used for description.

For example, the network device may determine the channel matrix for the first UE based on an uplink reference signal (for example, a first uplink reference signal) from the first UE, where the first uplink reference signal is, for example, an SRS.

Manner 3: The network device configures, in one UE group, UEs that are in the plurality of UEs, between which a channel correlation is greater than a first threshold and that need to perform a same service. In other words, one UE group includes UEs that are in the plurality of UEs and that need to perform a same service, and a channel correlation between any two UEs is greater than the first threshold.

For a manner in which the network device determines UEs that are in the plurality of UEs and that need to perform a same service and determines a channel correlation between any two of the plurality of UEs, refer to the foregoing descriptions. Details are not described herein again.

S202: The plurality of UEs separately send uplink signals to the network device on the first resource. Correspondingly, the network device receives the uplink signals from the plurality of UEs on the first resource.

In FIG. 2, an example in which the plurality of UEs include the first UE and the second UE is used. S202 may include S202a and S202b. S202a is that the first UE sends a first uplink signal U1 to the network device, and correspondingly, the network device receives the first uplink signal U1 from the first UE. S202b is that the second UE sends a second uplink signal U2 to the network device, and correspondingly, the network device receives the second uplink signal U2 from the second UE.

S202a and S202b may be performed in any sequence. For example, S202a and S202b are performed at the same time, S202a is performed before S202b, or S202b is performed before S202a.

In a possible implementation, the first uplink signal U1 and the second uplink signal U2 may be superposed on the first resource to obtain a third uplink signal U3.

Specifically, because the first UE sends the first uplink signal U1 on the first resource, and the second UE also sends the second uplink signal U2 on the first resource, the first uplink signal U1 and the second uplink signal U2 may be superposed on the first resource. This is equivalent to that the network device receives, on the first resource, a superposition result of the first uplink signal U1 and the second uplink signal U2. For ease of differentiation, in this embodiment of this application, the superposition result of the first uplink signal U1 and the second uplink signal U2 is referred to as the third uplink signal U3.

The third uplink signal U3 includes one or more of a first superposition result, a second superposition result, and a third superposition result. The first superposition result is a superposition result of the first uplink signal U1 and the second uplink signal U2 in frequency domain or time domain. The second superposition result is a superposition result of the first uplink signal U1 and the second uplink signal U2 in antenna domain or beam domain. The third superposition result is a superposition result of the first uplink signal U1 and the second uplink signal U2 in code domain.

Optionally, both the first uplink signal U1 and the second uplink signal U2 may be represented in a form of a complex number (specifically, for example, a complex vector or a complex matrix) in frequency domain, time domain, antenna domain, beam domain, or code domain. In this case, the third uplink signal U3 may be considered as a sum of the complex numbers.

For example, if the first uplink signal U1 and the second uplink signal U2 are complex vectors, the third uplink signal U3 is correspondingly a complex vector; or if the first uplink signal U1 and the second uplink signal U2 are complex matrices, the third uplink signal U3 is correspondingly a complex matrix.

There are a plurality of possible implementations for the first uplink signal U1 and the second uplink signal U2, which are separately described below.

In a first possible implementation, both the first uplink signal U1 and the second uplink signal U2 are uplink reference signals. The uplink reference signal is, for example, an SRS or a demodulation reference signal (demodulation reference signal, DMRS).

In a second possible implementation, both the first uplink signal U1 and the second uplink signal U2 are analog signals, the first uplink signal U1 indicates M elements in a first matrix corresponding to the first UE, and the second uplink signal U2 indicates M elements in a first matrix corresponding to the second UE. It may be further understood that the M elements in the first matrix corresponding to the first UE are carried on an analog signal, and the M elements in the first matrix corresponding to the second UE are carried on an analog signal. M is a positive integer. For a meaning of the first matrix, refer to the foregoing content.

It should be noted that the M elements indicated by the first uplink signal U1 are at M different locations in the first matrix corresponding to the first UE. In addition, the M elements indicated by the second uplink signal U2 are at M different locations in the first matrix corresponding to the second UE.

In an example, M locations of the M elements indicated by the first uplink signal U1 in the first matrix corresponding to the first UE are the same as M locations of the M elements indicated by the second uplink signal U2 in the first matrix corresponding to the second UE. It may be further understood that a location of each of the M elements indicated by the first uplink signal U1 in the first matrix corresponding to the first UE is the same as that of each of the M elements indicated by the second uplink signal U2 in the first matrix corresponding to the second UE.

For example, the M locations include a location (1,2), and the location corresponds to a $2^{nd}$ element in a $1^{st}$ row in the first matrix corresponding to the first UE, and also corresponds to a $2^{nd}$ element in a $1^{st}$ row in the first matrix corresponding to the second UE.

Optionally, the M locations may be configured by the network device for the plurality of UEs, may be determined by the plurality of UEs through negotiation, or may be configured in the plurality of UEs by using a protocol. This is not limited in this embodiment of this application.

In a possible implementation, the first uplink signal U1 may indicate M elements in a first matrix for the first UE at a $K^{th}$ spatial layer in P spatial layers, and the second uplink signal U2 indicates M elements in a first matrix for the second UE at a K$^{th}$ spatial layer in P spatial layers. P is an integer greater than or equal to 1, and K is a positive integer less than or equal to P.

Specifically, both the first UE and the second UE correspond to P spatial layers, and both the first UE and the second UE correspond to P first matrices. One of the P first matrices corresponding to the first UE corresponds to one of the P spatial layers corresponding to the first UE. One of the P first matrices corresponding to the second UE corresponds to one of the P spatial layers corresponding to the second UE.

In this example, M locations corresponding to the M elements that are indicated by the first uplink signal U1 and that are in the first matrix for the first UE at the K$^{th}$ spatial layer in the P spatial layers may be the same as M locations corresponding to the M elements that are indicated by the second uplink signal U2 and that are in the first matrix for the second UE at the K$^{th}$ spatial layer in the P spatial layers. In other words, the M locations may be understood as same M locations, indicated by the second uplink signal U2, in the first matrix for the first UE at the K$^{th}$ spatial layer in the P spatial layers and in the first matrix for the second UE at the K$^{th}$ spatial layer in the P spatial layers.

For example, both the M locations in the first matrix for the first UE at the K$^{th}$ spatial layer in the P spatial layers and the M locations in the first matrix for the second UE at the K$^{th}$ spatial layer in the P spatial layers include a 1$^{st}$ location in a 1$^{st}$ row and a 3$^{rd}$ location in a 2$^{nd}$ row in the first matrix.

Optionally, respective M locations corresponding to first matrices for the first UE at any two of the P spatial layers are the same, and respective M locations corresponding to first matrices for the second UE at any two of the P spatial layers are the same. It may be further understood that the M locations correspond to the P first matrices for the first UE, and also correspond to the P first matrices for the second UE.

For example, the first UE includes two spatial layers (equivalent to that a value of P is 2), which are specifically a 1$^{st}$ spatial layer and a 2$^{nd}$ spatial layer. M locations corresponding to a first matrix for the first UE at the 1$^{st}$ spatial layer include a 1$^{st}$ location in a 1$^{st}$ row and a 3$^{rd}$ location in a 2$^{nd}$ row in the first matrix at the 1$^{st}$ spatial layer. M locations corresponding to a first matrix for the first UE at the 2$^{nd}$ spatial layer also include a 1$^{st}$ location in a 1$^{st}$ row and a 3$^{rd}$ location in a 2$^{nd}$ row in the first matrix at the 1$^{st}$ spatial layer.

In another possible implementation, the first uplink signal U1 may indicate M elements in a first matrix for the first UE on one antenna (or antenna port) in R antennas (or antenna ports), and the second uplink signal U2 indicates M elements in a first matrix for the second UE on one antenna (or antenna port) in T antennas (or antenna ports). Both R and T are positive integers, and values of R and T may be the same or different.

Specifically, the first UE includes the R antennas (or antenna ports), and the first UE corresponds to R first matrices. The second UE includes the T antennas (or antenna ports), and the second UE corresponds to T first matrices. One of the R first matrices corresponding to the first UE corresponds to one of the R antennas (or antenna ports) corresponding to the first UE. One of the T first matrices corresponding to the second UE corresponds to one of the T antennas (or antenna ports) corresponding to the second UE.

In this case, M locations of the M elements indicated by the first uplink signal U1 in the first matrix for the first UE on the one antenna (or antenna port) may be the same as M locations of the M elements indicated by the second uplink signal U2 in the first matrix for the second UE on the one antenna (or antenna port). In other words, the M locations correspond to the M locations of the M elements indicated by the first uplink signal U1 in the first matrix for the first UE on the one antenna (or antenna port) in the R antennas (or antenna ports), and also correspond to the M locations of the M elements indicated by the second uplink signal U2 in the first matrix for the second UE on the one antenna (or antenna port) in the T antennas (or antenna ports).

S203: The network device determines a downlink precoding matrix based on the first uplink signal U1 and the second uplink signal U2.

The downlink precoding matrix is used by the network device to send data to the plurality of UEs. It may be further understood that the downlink precoding matrix is used by the network device to perform downlink transmission to the first UE and the second UE. The downlink transmission is, for example, transmitting a physical downlink control channel (physical downlink control channel, PDCCH) or a physical downlink shared channel (physical downlink shared channel, PDSCH). In other words, the downlink precoding matrix is a precoding matrix shared by the first UE and the second UE.

For example, the network device may precode, based on the downlink precoding matrix, data to be sent to the first UE and the second UE.

In case of different content of the first uplink signal U1 and the second uplink signal U2, the network device determines the downlink precoding matrix in different manners. The following separately describes the manners.

Example 1: Both the first uplink signal U1 and the second uplink signal U2 are the reference signals in the first possible implementation.

The network device may determine a first uplink channel matrix by combining the first uplink signal U1 and the second uplink signal U2. For example, the network device may use the third uplink signal U3 as Y in the foregoing formula (1), and use the first uplink signal U1 or the second uplink signal U2 as X in the foregoing formula (1), to determine the first uplink channel matrix based on the foregoing formula (1). The first uplink channel matrix is equivalent to representing channels for the plurality of UEs, or may be considered as a sum of channel matrices for the plurality of UEs.

After the network device determines the first uplink channel matrix, the network device may obtain a first downlink channel matrix based on reciprocity between an uplink channel and a downlink channel. The network device may perform eigenvalue decomposition or SVD on a covariance matrix of the first downlink channel matrix to obtain the downlink precoding matrix. Alternatively, the network device performs eigenvalue decomposition or SVD on the first downlink channel matrix to obtain the downlink precoding matrix.

Example 2: Both the first uplink signal U1 and the second uplink signal U2 are the analog signals in the second possible implementation, the first uplink signal U1 indicates the M elements in the first matrix for the first UE, and the second uplink signal U2 indicates the M elements in the first matrix for the first UE.

Specifically, the network device determines, based on the first uplink signal U1 and the second uplink signal U2, a sum of an $i^{th}$ element in the M elements indicated by the first uplink signal U1 and a $j^{th}$ element in the M elements indicated by the second uplink signal U2, where i and j may be sequentially valued from 1 to M. Values of i and j may be the same or different. By analogy, the network device may obtain M summation results. A location of the $i^{th}$ element in the first matrix corresponding to the first UE is the same as that of the $j^{th}$ element in the first matrix corresponding to the second UE. The network device determines the downlink precoding matrix based on the M summation results and the M locations.

For example, the network device determines one spatial-frequency combination coefficient matrix based on the M summation results and the M locations. For ease of differentiation, the one spatial-frequency combination coefficient matrix is referred to as a third matrix in this embodiment of this application. The M summation results are M elements in the third matrix.

Optionally, M locations corresponding to the M summation results in the third matrix are the same as the foregoing M locations. One summation result is one combination coefficient in the third matrix. Then, the network device determines the downlink precoding matrix based on the third matrix.

In an example, when the first uplink signal U1 indicates the M elements in the first matrix for the first UE at the $K^{th}$ spatial layer in the P spatial layers, and the second uplink signal U2 indicates the M elements in the first matrix for the second UE at the $K^{th}$ spatial layer in the P spatial layers, the third matrix determined in this case may be understood as a spatial-frequency combination coefficient matrix at one spatial layer. The network device may determine, from a spatial domain vector set and a frequency domain vector set, a spatial domain vector and a frequency domain vector that correspond to each of the M summation results in the third matrix. By analogy, the network device may determine M spatial domain vectors and M frequency domain vectors that correspond to the M summation results. The M spatial domain vectors form a spatial domain matrix, and the M frequency domain vectors form a frequency domain matrix. The spatial domain vector set and the frequency domain vector set may be preconfigured in the network device, for example, preconfigured in the network device by using a protocol. The network device determines the downlink precoding matrix based on the third matrix, the spatial domain matrix including the M spatial domain vectors, and the frequency domain matrix including the M frequency domain vectors. For example, the network device may substitute the third matrix, the spatial domain matrix including the M spatial domain vectors, and the frequency domain matrix including the M frequency domain vectors into the foregoing formula (2), to obtain the downlink precoding matrix.

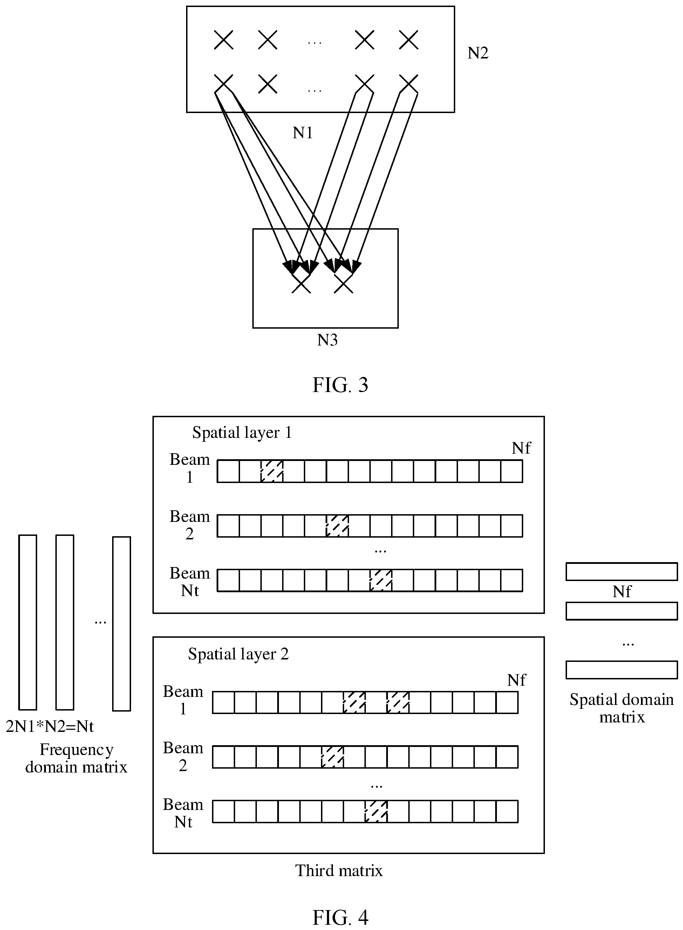

FIG. 3 is a diagram of antenna structures of the UE and the network device according to an embodiment of this application. As shown in FIG. 3, the network device includes 2*N1*N2 antennas, and all the antennas included in the network device include two polarization directions, where "*" indicates a product. FIG. 3 shows only an antenna structure of the first UE. As shown in FIG. 3, the first UE includes N3 antennas, and all the antennas included in the first UE include two polarization directions. In FIG. 3, an arrowed line may be considered as a spatial layer.

The antenna structure in FIG. 3 is still used as an example, and an example in which both the first UE and the second UE correspond to two spatial layers (for example, a spatial layer 1 and a spatial layer 2) is used. The M elements indicated by the first uplink signal U1 include an element at a $3^{rd}$ location in a $1^{st}$ row, an element at a $6^{th}$ location in a $2^{nd}$ row, and an element at an $8^{th}$ location in an $Nt^{th}$ row in a first matrix for the first UE at the spatial layer 1, where Nt=2*N1 *N2. Similarly, the M elements indicated by the second uplink signal U2 include an element at a $3^{rd}$ location in a $1^{st}$ row, an element at a $6^{th}$ location in a $2^{nd}$ row, and an element at an $8^{th}$ location in an $Nt^{th}$ row in a first matrix for the second UE at the spatial layer 1.

In this way, the network device may determine, based on the first uplink signal U1 and the second uplink signal U2, a sum of the element at the $3^{rd}$ location in the $1^{st}$ row in the first matrix corresponding to the first UE at the spatial layer 1 and the element at the $3^{rd}$ location in the $1^{st}$ row in the first matrix corresponding to the second UE at the spatial layer 1, a sum of the element at the $6^{th}$ location in the $2^{nd}$ row in the first matrix corresponding to the first UE at the spatial layer 1 and the element at the $6^{th}$ location in the $2^{nd}$ row in the first matrix corresponding to the second UE at the spatial layer 1, and a sum of the element at the $8^{th}$ location in the $Nt^{th}$ row in the first matrix corresponding to the first UE at the spatial layer 1 and the element at the $8^{th}$ location in the $Nt^{th}$ row in the first matrix corresponding to the second UE at the spatial layer 1. This is equivalent to that the network device obtains four summation results.

The network device determines, based on the four summation results corresponding to the spatial layer 1, a third matrix at the spatial layer 1 shown in FIG. 4. In FIG. 4, rectangular boxes filled with dashed lines represent locations, in the third matrix, of the four summation results determined by the network device. The network device may determine, based on the third matrix at the spatial layer 1, a spatial domain matrix and a frequency domain matrix that correspond to the third matrix at the spatial layer 1, and then determine a downlink precoding matrix at the spatial layer 1 based on the third matrix at the spatial layer 1, and the spatial matrix and the frequency domain matrix that are at the spatial layer 1.

Alternatively, for example, the first uplink signal U1 indicates an element at a $6^{th}$ location in a $1^{st}$ row, an element at a $7^{th}$ location in the $1^{st}$ row, an element at a $9^{th}$ location in the $1^{st}$ row, an element at a $6^{th}$ location in a $2^{nd}$ row, and an element at an $8^{th}$ location in an $Nt^{th}$ row in a first matrix for the first UE at the spatial layer 2. The second uplink signal U2 indicates an element at a $7^{th}$ location in a $1^{st}$ row, an element at a $9^{th}$ location in the $1^{st}$ row, an element at a $6^{th}$ location in a $2^{nd}$ row, and an element at an $8^{th}$ location in an $Nt^{th}$ row in a first matrix for the second UE at the spatial layer 2.

The network device may obtain, based on the first uplink signal U1 and the second uplink signal U2, a sum of the element at the $7^{th}$ location in the $1^{st}$ row in the first matrix for the first UE at the spatial layer 2 and the element at the $7^{th}$ location in the $1^{st}$ row in the first matrix for the second UE at the spatial layer 2, a sum of the element at the $6^{th}$ location in the $2^{nd}$ row in the first matrix for the first UE at the spatial layer 2 and the element at the $6^{th}$ location in the $2^{nd}$ row in the first matrix for the second UE at the spatial layer 2, a sum of the element at the $9^{th}$ location in the $1^{st}$ row in the first matrix for the first UE at the spatial layer 2 and the element at the $9^{th}$ location in the $1^{st}$ row in the first matrix for the second UE at the spatial layer 2, and a sum of the element at the $8^{th}$ location in the $Nt^{th}$ row in the first matrix for the first UE at the spatial layer 2 and the element at the $8^{th}$ location in the $Nt^{th}$ row in the first matrix for the second UE at the spatial layer 2. Therefore, the network device may obtain three summation results.

The network device may determine, based on the three summation results corresponding to the spatial layer 2, a third matrix at the spatial layer 2 shown in FIG. 4. The network device may determine, based on the third matrix at the spatial layer 2, a spatial domain matrix and a frequency domain matrix that correspond to the third matrix at the spatial layer 2, and then determine a downlink precoding matrix at the spatial layer 2 based on the third matrix at the spatial layer 2, and the spatial domain matrix and the frequency domain matrix that correspond to the third matrix at the spatial layer 2.

In another example, when the first uplink signal U1 indicates the M elements in the first matrix for the first UE on the one antenna (or antenna port) in the R antennas (or antenna ports), and the second uplink signal U2 indicates the M elements in the first matrix for the second UE on the one antenna (or antenna port) in the T antennas (or antenna ports), the third matrix determined by the network device is equivalent to a third matrix corresponding to one antenna pair, and the antenna pair includes one antenna of the first UE and one antenna of the second UE. The network device may determine a spatial domain matrix and a frequency domain matrix that correspond to the third matrix, and obtain, based on the third matrix, the spatial domain matrix, and the frequency domain matrix, a channel matrix corresponding to the antenna pair. The network device may determine the downlink precoding matrix based on the channel matrix corresponding to the antenna pair. For a manner of determining the spatial domain matrix and the frequency domain matrix that correspond to the third matrix, refer to the foregoing content.

In case of different quantity relationships between the R antennas of the first UE and the T antennas of the second UE, the network device determines the downlink precoding matrix in different manners. The following separately describes the manners.

Case 1: When the first UE and the second UE have a same quantity of antennas, and both the first UE and the second UE have only one antenna (that is, both R and T are 1), the network device may determine a channel matrix corresponding to one antenna pair, to obtain the downlink precoding matrix. For example, the network device may process, by using a maximum ratio combining (maximal ratio combining, MRC) algorithm, the channel matrix of the antenna pair corresponding to the antenna pair, to obtain the downlink precoding matrix.

Case 2: When the first UE and the second UE have a same quantity of antennas, and both the first UE and the second UE include a plurality of antennas (that is, R and T are the same, and both R and T are greater than or equal to 2), the network device may determine R channel matrices, where the R channel matrices correspond to R antenna pairs, each channel matrix corresponds to one antenna pair, and each of the R antenna pairs includes one of the R antennas of the first UE and one of the T antennas of the second UE. For a manner in which the network device determines each of the R channel matrices, refer to the foregoing content that the network device determines the channel matrix corresponding to the one antenna pair. Details are not described herein again. The network device may perform singular value decomposition or eigenvalue decomposition on the R channel matrices to obtain the downlink precoding matrix. Alternatively, the network device performs singular value decomposition or eigenvalue decomposition on covariance matrices of the R channel matrices to obtain the downlink precoding matrix.

Case 3: The first UE and the second UE have different quantities of antennas, and it is assumed that the quantity of the R antennas of the first UE is greater than the quantity of the T antennas of the second UE (that is, R is greater than T). In this assumption, the network device may obtain F channel matrices. A value of F is determined based on R and/or T. The network device may perform singular value decomposition or eigenvalue decomposition on the F channel matrices to obtain the downlink precoding matrix. Alternatively, the network device performs singular value decomposition or eigenvalue decomposition on covariance matrices of the F channel matrices to obtain the downlink precoding matrix.

In case of different values of F, the F channel matrices are determined in different manners. The following separately describes the manners.

In an example, F is equal to T. In this case, the F channel matrices correspond to T antenna pairs, and each channel matrix corresponds to one antenna pair. Each of the T antenna pairs includes one of the R antennas of the first UE and one of the T antennas of the second UE. In this case, for a manner of determining each of the F channel matrices, refer to the foregoing content of determining the channel matrix corresponding to the one antenna pair in Case 1. Details are not described herein again.

In another example, F is equal to R. In this case, T channel matrices in the F channel matrices may correspond to T antenna pairs. For meanings of the T channel matrices and a manner of determining each of the T channel matrices, refer to the content described in the foregoing example. Details are not described herein again.

Optionally, each of remaining (F-T) channel matrices in the F channel matrices may be a channel matrix corresponding to one of remaining (R-T) antennas of the first UE. The remaining (F-T) channel matrices are channel matrices other than the T channel matrices in the F channel matrices.

For example, the network device determines, based on a $(T+1)^{th}$ uplink signal sent by the first UE, a channel matrix corresponding to a $(T+1)^{th}$ antenna of the first UE. By analogy, the network device may obtain (F-T) channel matrices for the first UE.

The $(T+1)^{th}$ uplink signal may be an uplink reference signal. Alternatively, the $(T+1)^{th}$ uplink signal may be an analog signal or a digital signal, and the $(T+1)^{th}$ uplink signal indicates a non-zero element or M elements in a first matrix corresponding to the first UE on the $(T+1)^{th}$ antenna in the R antennas. M locations of the M elements in the first matrix corresponding to the first UE on the $(T+1)^{th}$ antenna in the R antennas may also be the foregoing M locations.

S204: The network device sends first data. Correspondingly, the plurality of UEs receive the first data from the network device.

The first data may be obtained by the network device by precoding to-be-sent data based on first downlink precoding. If the first UE and the second UE correspond to a same service, the first data may be data corresponding to the service. A form of the data is, for example, a data stream.

In an example, the network device may send the first data to the plurality of UEs in the unicast manner. In this case, S204 specifically includes S204a and S204b. S204a is that the network device sends the first data to the first UE, and correspondingly, the first UE receives the first data from the network device. S204b is that the network device sends the first data to the second UE, and correspondingly, the second UE receives the first data from the network device.

S204a and S204b may be performed in any sequence. For example, S204a and S204b are performed at the same time, S204a is performed before S204b, or S204b is performed before S204a.

In another example, the network device may send the first data to the plurality of UEs in the multicast manner. For example, the network device may send the first data to the UE group based on the group identifier of the UE group (the UE group includes the first UE and the second UE), which is equivalent to sending the first data to the first UE and the second UE.

In a possible implementation, the first UE may process (for example, decode or display) a first part of data in the first data, and the second UE may process (for example, decode or display) a second part of data in the first data. The first part of data may be some or all of the first data. The second part of data may be some or all of the first data. The first part of data is different from the second part of data.

For example, although both the first UE and the second UE receive the first data from the network device, the first UE and the second UE may selectively process some or all of the first data based on their respective actual service processing requirements.

For example, the first UE and the second UE correspond to the XR service. After the first UE and the second UE receive the first data, the first UE and the second UE may present, based on the first data, interfaces corresponding to the XR service in different views.

In the embodiment shown in FIG. 2, the plurality of UEs may send the uplink signals to the network device on the first resource, which helps reduce resource overheads for sending the uplink signals. In addition, the network device may determine, based on the uplink signals from the plurality of UEs, one downlink precoding matrix shared by the plurality of UEs. This provides a manner of calculating the downlink precoding matrix, and does not need to separately determine a downlink precoding matrix for each UE. This helps simplify a process in which the network device calculates a precoding matrix and reduce overheads for calculating the downlink precoding matrix. In addition, the plurality of UEs share one downlink precoding matrix, which helps reduce resource overheads for precoding matrices for the plurality of UEs. In addition, when sending data to the plurality of UEs, the network device may process the data once by using the downlink precoding matrix and then send processed data to the plurality of UEs, which helps reduce processing of the network device in a precoding process.

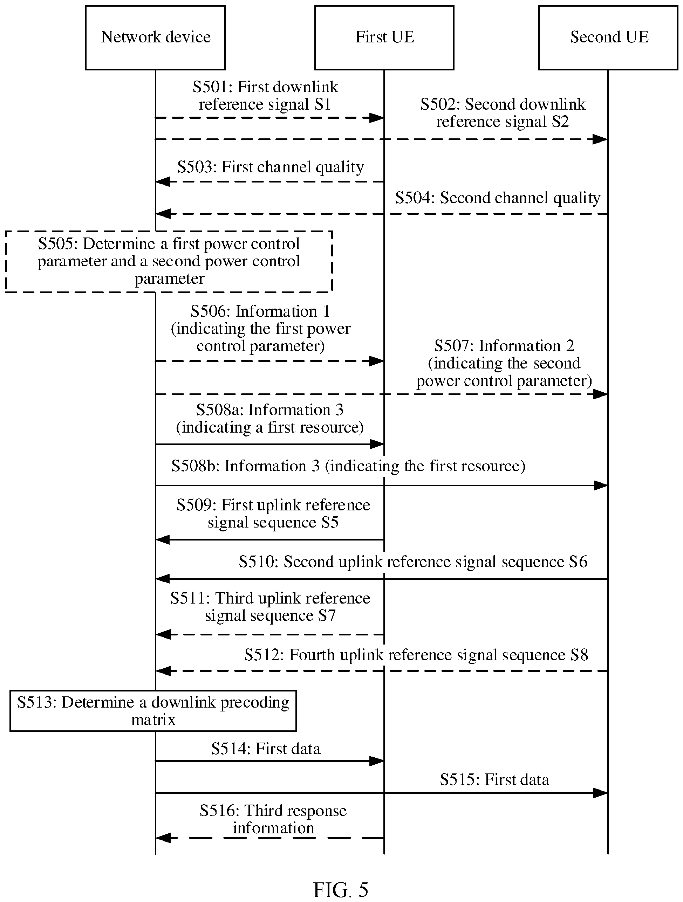

FIG. 5 is a schematic flowchart of a communication method according to an embodiment of this application. In FIG. 5, an example in which the first uplink signal U1 and the second uplink signal U2 in the embodiment shown in FIG. 2 are uplink reference signals in the first possible implementation is used for description.

S501: A network device sends a first downlink reference signal S1 to a first UE. Correspondingly, the first UE receives the first downlink reference signal S1 from the network device. The first downlink reference signal S1 is, for example, a channel state information-reference signal (channel state information-reference signal, CSI-RS).

In an example, the first UE may send the first downlink reference signal S1 to the network device on a second resource. For a meaning of the second resource, refer to the foregoing content of the first resource. The second resource may be configured by the network device for the first UE.

S502: The network device sends a second downlink reference signal S2 to a second UE. Correspondingly, the second UE receives the second downlink reference signal S2 from the network device. The second downlink reference signal S2 is, for example, a CSI-RS.

In an example, the second UE may send the second downlink reference signal S2 to the network device on a third resource. For a meaning of the third resource, refer to the foregoing content of the first resource. The third resource may be configured by the network device for the second UE. Optionally, the second resource is different from the third resource.

S501 and S502 may be performed in any sequence. For example, S501 and S502 are performed at the same time, S501 is performed before S502, or S502 is performed before S501.

S503: The first UE sends first channel quality to the network device. Correspondingly, the network device receives the channel quality from the first UE.

In this embodiment of this application, channel quality of the first UE is referred to as the first channel quality. For example, the first channel quality is represented by a channel quality indicator (channel quality indicator, CQI), a reference signal received power (reference signal received power, RSRP), or a channel matrix.

For example, the first UE determines the first channel quality of the first UE based on the first downlink reference signal S1, and the network device may receive the first channel quality of the first UE from the first UE.

In another possible embodiment, the first UE may send a first uplink reference signal S3 to the network device. Correspondingly, the network device receives the first uplink reference signal S3 from the first UE, and determines a channel matrix for the first UE based on the first uplink reference signal S3. The channel matrix may be considered as an example of uplink channel quality.

S504: The second UE sends second channel quality to the network device. Correspondingly, the network device receives the second channel quality from the second UE.

In this embodiment of this application, channel quality of the second UE is referred to as the second channel quality. For a manner of representing the second channel quality, refer to the foregoing content of the first channel quality. For a manner in which the second UE determines the second channel quality, refer to the foregoing content that the first UE determines the first channel quality.

In another possible embodiment, the second UE may send a second uplink reference signal S4 to the network device. Correspondingly, the network device receives the second uplink reference signal S4 from the second UE, and determines a channel matrix for the second UE based on the second uplink reference signal S4. The channel matrix may be considered as an example of uplink channel quality.

S505: The network device determines a first power control parameter and a second power control parameter.

The first power control parameter is a power control parameter of the first UE. The first power control parameter indicates a power at which the first UE sends a first uplink signal (for example, an uplink reference signal). The second power control parameter is a power control parameter of the second UE. The second power control parameter indicates a power at which the second UE sends a first uplink signal (for example, an uplink reference signal).

The first power control parameter may include a first expected power and/or a first power difference. The first expected power is a power at which the network device expects the first UE to send the first uplink signal, or a power at which the network device expects to receive the first uplink signal sent by the first UE. The first power difference is a difference between powers at which the first UE sends the first uplink signal twice. The second power control parameter may include a second expected power and/or a second power difference. The second expected power is a power at which the network device expects the second UE to send the first uplink signal, or a power at which the network device expects to receive the first uplink signal sent by the second UE. The second power difference is a difference between powers at which the second UE sends the first uplink signal twice.

It should be noted that the first expected power may be the same as or different from the second expected power, and the first power difference may be the same as or different from the second power difference.

In an example, the network device may determine the first power control parameter and the second power control parameter based on the first channel quality and the second channel quality.

For example, the network device determines the first power control parameter and the second power control parameter based on a relative value between the first channel quality and the second channel quality. For example, the network device determines that the first channel quality is higher than the second channel quality (for example, a CQI of the first UE is greater than that of the second UE, or an RSRP of the first UE is greater than that of the second UE), and the network device determines that the first expected power is lower than the second expected power.

In another example, the network device may determine the first power control parameter based on first response information of the first UE for the first downlink reference signal S1. The first response information indicates that the first UE successfully receives the first downlink reference signal S1 or fails to receive the first downlink reference signal S1. The first response information indicates, for example, a negative acknowledgment (NACK) or an acknowledgment (ACK) in hybrid automatic repeat request (hybrid automatic repeat request, HARQ). For example, the network device determines that the first response information of the first UE indicates the NACK, and the network device determines to increase the first power difference by a preset value; or the network device determines that the first response information of the first UE indicates the ACK, and the network device determines to decrease the first power difference by a preset value. The preset value may be preconfigured in the network device.

Similarly, the network device may determine the second power control parameter based on second response information of the second UE for the second downlink reference signal S2. For a meaning of the second response information, refer to the meaning of the first response information. For a manner in which the network device determines the second power control parameter based on the second response information, refer to the foregoing content that the network device determines the second power control parameter based on the first response information.

It should be noted that in the embodiment shown in FIG. 5, an example in which power control parameters (the first power control parameter and the second power control parameter) of all of a plurality of UEs are determined is used for description. In an actual case, the network device may determine power control parameters of some of the plurality of UEs. For example, the network device determines only the first power control parameter of the first UE, or the network device determines only the second power control parameter of the second UE.

S506: The network device sends information 1 to the first UE. Correspondingly, the first UE receives the information 1 from the network device. The information 1 indicates the first power control parameter. The information 1 may also be referred to as first information.

S507: The network device sends information 2 to the second UE. Correspondingly, the second UE receives the information 2 from the network device. The information 2 indicates the second power control parameter. The information 2 may also be referred to as fourth information.

S505 and S506 may be performed in any sequence. For example, S506 and S507 are performed at the same time, S506 is performed before S507, or S507 is performed before S506.

In an example, the first UE and the second UE may be preconfigured with powers for sending the uplink reference signals. In this case, the network device does not need to determine the first power control parameter and the second power control parameter. In other words, S501 to S507 do not need to be performed, that is, S501 to S507 are optional steps.

S508: The network device sends information 3. Correspondingly, the first UE and the second UE receive the information 3 from the network device. The information 3 indicates a first resource. The information 3 may also be referred to as fifth information.

For a manner in which the network device sends the information 3 and a meaning of the first resource, refer to the foregoing content in FIG. 2. Details are not described herein again. When the network device sends the information 3 to the first UE and the second UE in a unicast manner, S508 includes S508a and S508b. S508a is that the network device sends the information 3 to the first UE, and correspondingly, the first UE receives the information 3 from the network device. S508b is that the network device sends the information 3 to the second UE, and correspondingly, the second UE receives the information 3 from the network device.

S509: The first UE sends a first uplink reference signal sequence S5 to the network device. Correspondingly, the network device receives the first uplink reference signal sequence S5 from the first UE. The uplink reference signal sequence S5 in this embodiment of this application is an example of the foregoing first uplink signal U1.

For example, the first UE sends the first uplink signal sequence S5 on a resource 1. An uplink reference signal sequence may be considered as one or more uplink reference signals. One or more uplink reference signals in an uplink reference signal sequence may occupy a same time domain resource, and occupy different frequency domain resources.

For example, the resource 1 may include a plurality of REs, where each RE corresponds to an index (index) value. The first uplink reference signal sequence S5 may occupy at least one of the plurality of REs in frequency domain.

In an example, a phase of the first uplink reference signal sequence S5 on each RE may be obtained by jumping a first preset phase of the first uplink reference signal sequence S5 on each RE in a first jump manner. It may be further understood that phases of the first uplink reference signal sequence S5 on different REs are jumped in the first jump manner. In other words, phases of the first uplink reference signal sequence S5 on any two REs are both jumped in the first jump manner.

The jump manner may be understood as defining a jump rule of the first preset phase of the first uplink reference signal sequence S5 on each RE. Specifically, jumping is, for example, adding a phase to the first preset phase of the first uplink reference signal sequence S5 on each RE, or subtracting a phase from the first preset phase. The first jump manner may be configured by the network device for the first UE, or may be configured in the first UE by using a protocol.

In this example, phases of the first uplink reference signal sequence S5 on different REs are jumped, so that the phases of the first uplink reference signal sequence S5 sent by the first UE on the different REs are variable to some extent. In this way, phases of the first uplink reference signal sequence S5 received by the network device on different REs are also variable to some extent.

In an example, first preset phases of the first uplink reference signal sequence S5 on any two REs may be the same or different. Phases (equivalent to jumped phases) of the first uplink reference signal sequence S5 sent by the first UE on any two REs may be the same or different.

In a possible implementation, when the first UE receives the information 1 from the network device, the first UE may determine, based on the first power control parameter indicated by the information 1, a power for sending the first uplink reference signal sequence S5, and send the first uplink reference signal sequence S5 based on the determined power for sending the first uplink reference signal sequence S5.

For example, the first power control parameter indicates the first expected power, and the first UE may determine, based on the first expected power, the power for sending the first uplink reference signal sequence S5. For example, when the first expected power is the power at which the network device expects the first UE to send the first uplink signal, the first UE may directly determine the first expected power as the power for sending the first uplink reference signal sequence S5.

For another example, when the first expected power is the power at which the network device expects to receive the first uplink signal sent by the first UE, the first UE may determine, based on the first expected power and a fading value (including a large-scale fading value and/or a small-scale fading value), the power for sending the first uplink reference signal sequence S5. For example, the power for sending the first uplink reference signal sequence S5 is a sum of the first expected power and the fading value. The large-scale fading value is a signal power loss caused by an obstacle. The small-scale fading value is a signal power loss caused by a relative movement between the network device and the first UE.

For another example, the first power control parameter indicates the first power difference, and the first UE may determine, based on a power for sending the first uplink reference signal sequence S5 last time and the first power difference, the power for sending the first uplink reference signal sequence S5.

For another example, when the first power control parameter indicates the expected power and the power difference, the first UE may select one of the expected power and the power difference to determine the power for the first uplink reference signal sequence S5.

S510: The second UE sends a second uplink reference signal sequence S6 to the network device. Correspondingly, the network device receives the second uplink reference signal sequence S6 from the second UE. The second uplink reference signal sequence S6 in this embodiment of this application is an example of the foregoing second uplink signal U2 sent by the second UE.

Optionally, the first uplink reference signal sequence S5 and the second uplink reference signal sequence S6 of the second UE may occupy a same time domain resource and a same frequency domain resource. For example, the first UE sends the first uplink reference signal sequence S6 to the network device on the resource 1, and the second UE sends the second uplink reference signal sequence S6 to the network device on the resource 1. The resource 1 may be considered as an example of the first resource in the embodiment shown in FIG. 2.

In an example, a phase of the second uplink reference signal sequence S6 sent by the second UE on each RE may be obtained by jumping a second preset phase of the second uplink reference signal sequence S6 on each RE in a second jump manner. It may be further understood that phases of the second uplink reference signal sequence S6 on different REs are jumped in the second jump manner. In other words, phases of the second uplink reference signal sequence S6 on any two REs are both jumped in the second jump manner. The first jump manner may be different from the second jump manner.

It should be noted that second preset phases of the second uplink reference signal sequence S6 on any two REs may be the same or different. Phases (equivalent to jumped phases) of the second uplink reference signal sequence S6 sent by the second UE on any two REs may be the same or different.

In an example, when the second UE receives the information 2, the second UE may determine, based on the second power control parameter indicated by the information 2, a power at which the second UE sends the second uplink reference signal sequence S6. For a manner in which the second UE determines, based on the second power control parameter, the power for sending the second uplink reference signal sequence S6, refer to the foregoing content that the first UE determines, based on the first power control parameter, the power for sending the first uplink reference signal sequence S5. Details are not described herein again.

If the first uplink reference signal sequence S5 sent by the first UE on the resource 1 and the second uplink reference signal sequence S6 sent by the second UE on the resource 1 occupy a same time domain resource and a same frequency domain resource, the first uplink reference signal sequence S5 and the second uplink reference signal sequence S6 may be superposed on the resource 1. For ease of differentiation, a superposition result is referred to as a fifth reference signal sequence in this embodiment of this application. The fifth reference signal sequence is an example of the foregoing third uplink signal U3.

S511: The first UE sends a third uplink reference signal sequence S7 to the network device. Correspondingly, the network device receives the third uplink reference signal sequence S7 from the first UE. The third uplink reference signal sequence S7 in this embodiment of this application is an example of the foregoing first uplink signal U1 sent by the first UE.

For example, the first UE sends the third uplink reference signal sequence S7 to the network device on a resource 2. For example, the resource 2 may include a plurality of REs, where each RE corresponds to an index value. The third uplink reference signal sequence S7 may occupy at least one of the plurality of REs.

The first uplink reference signal sequence S5 and the third uplink reference signal sequence S7 occupy different resources. The resource indicates one or more of a time domain resource, a frequency domain resource, and a code domain resource.

For example, the first uplink reference signal sequence S5 occupies some or all resources corresponding to a $g^{th}$ slot or a $g^{th}$ frame. The third uplink reference signal sequence S7 occupies some or all resources corresponding to an $s^{th}$ slot or an $s^{th}$ frame. A resource that is occupied by a signal sequence and that corresponds to a slot may include one or more of a time domain resource occupied by the signal sequence in the slot, a frequency domain resource corresponding to the time domain resource occupied by the signal sequence in the slot, and a code domain resource corresponding to the time domain resource occupied by the signal sequence in the slot. Similarly, a resource that is occupied by a signal sequence and that corresponds to a frame may include one or more of a time domain resource occupied by the signal sequence on the frame, a frequency domain resource corresponding to the time domain resource occupied by the signal sequence on the frame, and a code domain resource corresponding to the time domain resource occupied by the signal sequence on the frame.

g and s may be the same or different. A relative location corresponding to a resource occupied by the first uplink reference signal sequence S5 in the $g^{th}$ slot or the $g^{th}$ frame may be the same as or different from that corresponding to a resource occupied by the third uplink reference signal sequence S7 in the $s^{th}$ slot or the $s^{th}$ frame. The relative location is, for example, an orthogonal frequency division multiplexing (orthogonal frequency division multiplexing, OFDM) index, a comb index, or a cyclic shift (cyclic shift, CS) index.

In an example, a phase of the third uplink reference signal sequence S7 on each RE may be obtained by jumping a third preset phase of the third uplink reference signal sequence S7 on each RE in the first jump manner. It may be further understood that phases of the third uplink reference signal sequence S7 on different REs are jumped in the first jump manner. In other words, phases of the third uplink reference signal sequence S7 on any two REs are both jumped in the first jump manner. For a meaning of the first jump manner, refer to the foregoing descriptions.

It should be noted that third preset phases of the third uplink reference signal sequence S7 on any two REs may be the same or different. Phases (equivalent to jumped phases) of the third uplink reference signal sequence S7 on any two REs may be the same or different.

In an example, a phase difference between the first uplink reference signal sequence S5 and the third uplink reference signal sequence S7 on REs with a same index value is not $2n\pi$, where n is an integer. In addition, a difference between a phase difference of the first uplink reference signal sequence S5 on an RE with a first index value and an RE with a second index value and a phase difference of the third uplink reference signal sequence S7 on an RE with the first index value and an RE with the second index value is $2m\pi$, where m is an integer.

For example, a difference between a phase of the first uplink reference signal sequence S5 on an RE 1 and a phase of the third uplink reference signal sequence S7 on an RE 1 is not $0$, $-2\pi$, $2\pi$, and the like, and a difference between a phase difference of the first uplink reference signal sequence S5 on the RE 1 and an RE 2 and a phase difference of the third uplink reference signal sequence S7 on the RE 1 and an RE 2 is 0. The RE 1 represents an RE whose index value is 1. The RE 2 represents an RE whose index value is 2.

In an example, the first UE may send only the first uplink reference signal sequence S6. In other words, step S511 does not need to be performed, that is, S511 is an optional step.

S512: The second UE sends a fourth uplink reference signal sequence S8 to the network device. Correspondingly, the network device receives the fourth uplink reference signal sequence S8 from the second UE. The fourth uplink reference signal sequence S8 in this embodiment of this application is an example of the foregoing second uplink signal U2 sent by the second UE.

The second uplink reference signal sequence S6 and the fourth uplink reference signal sequence S8 occupy different resources. The resource indicates one or more of a time domain resource, a frequency domain resource, and a code domain resource.

Optionally, the third uplink reference signal sequence S7 and the fourth uplink reference signal sequence S8 may occupy a same resource. The resource indicates one or more of a time domain resource, a frequency domain resource, and a code domain resource. For example, the first UE sends the third uplink reference signal sequence S7 to the network device on the resource 2, and the second UE sends the fourth uplink reference signal sequence S8 to the network device on the resource 2. The resource 2 may be considered as an example of the first resource in the embodiment shown in FIG. 2.

In an example, a phase of the fourth uplink reference signal sequence S8 sent by the second UE on each resource element may be obtained by jumping a fourth preset phase of the fourth uplink reference signal sequence S8 on each resource element in the second jump manner. It may be further understood that phases of the fourth uplink reference signal sequence S8 on different REs are jumped in the second jump manner. In other words, phases of the fourth uplink reference signal sequence S8 on any two REs are both jumped in the second jump manner. For a meaning of the second jump manner, refer to the foregoing descriptions.

It should be noted that fourth preset phases of the fourth uplink reference signal sequence S8 on any two REs may be the same or different. Phases (equivalent to jumped phases) of the fourth uplink reference signal sequence S8 on any two REs may be the same or different.

In an example, a phase difference between the second uplink reference signal sequence S6 and the fourth uplink reference signal sequence S8 on resource elements with a same index value is not $2n\pi$. In addition, a difference between a phase difference of the second uplink reference signal sequence S6 on a resource element with the first index value and a resource element with the second index value and a phase difference of the fourth uplink reference signal sequence S8 on a resource element with the first index value and a resource element with the second index value is $2m\pi$. Both n and m are integers, and values of n and m are, for example, 0, -1, 1, and 2.

For example, a difference between a phase of the second uplink reference signal sequence S6 on an RE 1 and a phase of the fourth uplink reference signal sequence S8 on an RE 1 is $\pi$. A difference between a phase difference of the second uplink reference signal sequence S6 on the RE 1 and an RE 2 and a phase difference of the fourth uplink reference signal sequence S8 on the RE 1 and an RE 2 is $2\pi$.

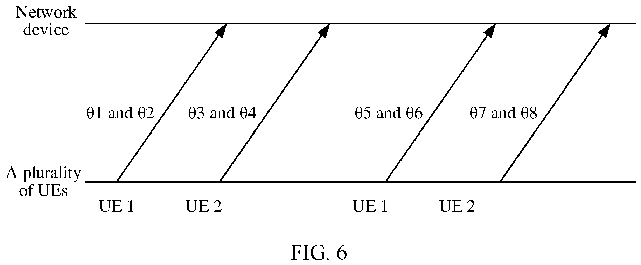

For example, FIG. 6 is an example diagram in which the first UE and the second UE separately send uplink reference signal sequences. As shown in FIG. 6, phases of the first uplink reference signal sequence S5 sent by the first UE in a first cycle on the RE 1 and the RE 2 are respectively $\theta1$ and $\theta2$. Phases of the second uplink reference sequence S6 sent by the second UE in the first cycle on the RE 1 and the RE 2 are respectively $\theta3$ and $\theta4$. Phases of the third uplink reference signal sequence S7 sent by the first UE in a second cycle on the RE 1 and the RE 2 are respectively $\theta5$ and $\theta6$. Phases of the fourth uplink reference signal sequence S8 sent by the second UE in the second cycle on the RE 1 and the RE 2 are respectively $\theta7$ and $\theta8$. A difference between $\theta1$ and $\theta5$ is not $2n\pi$. A difference between $\theta2$ and $\theta6$ is not $2n\pi$. A difference between $\theta3$ and $\theta7$ is not $2n\pi$. A difference between $\theta4$ and $\theta8$ is not $2n\pi$. In addition, a phase difference between $\theta1$ and $\theta2$ is equal to that between $\theta3$ and $\theta4$, and a phase difference between $\theta5$ and $\theta6$ is equal to that between $\theta7$ and $\theta8$.

If the first UE sends the third uplink reference signal sequence S7 on the resource 2, and the second UE sends the fourth uplink reference signal sequence S8 on the resource 2, the third uplink reference signal sequence S7 and the fourth uplink reference signal sequence S8 may be superposed on the resource 2. For ease of differentiation, a superposition result is referred to as a sixth reference signal sequence in this embodiment of this application. The sixth reference signal sequence is an example of the foregoing third uplink signal U3.

In an example, the second UE may send only the second uplink reference signal sequence S6. In other words, step S512 does not need to be performed, that is, S512 is an optional step.

S513: The network device determines a downlink precoding matrix.

For example, the network device may determine a first uplink channel matrix based on the first uplink reference signal sequence S5 and the second uplink reference signal sequence S6, based on the third uplink reference signal sequence S7 and the fourth uplink reference signal sequence S8, or based on the first uplink reference signal sequence S5, the second uplink reference signal sequence S6, the third uplink reference signal sequence S7, and the fourth uplink reference signal sequence S8, and then determine the downlink precoding matrix based on the first uplink channel matrix.

For example, the network device may determine the first uplink channel matrix based on the fifth reference signal sequence and/or the sixth reference signal sequence, and determine the downlink precoding matrix based on the first uplink channel matrix. For example, the network device performs singular value decomposition or eigenvalue decomposition on the first uplink channel matrix to obtain the downlink precoding matrix. For another example, the network device performs singular value decomposition or eigenvalue decomposition on a covariance matrix of the first uplink channel matrix to obtain the downlink precoding matrix.

When the network device determines the downlink precoding matrix by using the covariance matrix of the first uplink channel matrix, the covariance matrix of the first uplink channel matrix may be determined based on a transposed matrix of the first uplink channel matrix and a phase of an uplink reference signal sequence. Because the phase of the uplink signal sequence (for example, the first uplink reference signal sequence S5, the second uplink reference signal sequence S6, the third uplink reference signal sequence S7, and the fourth uplink reference signal sequence S8) in this embodiment of this application is variable to some extent, the covariance matrix that is of the first uplink channel matrix and that is determined by the network device by using the uplink signal sequence is also variable to some extent. Therefore, the determined covariance matrix of the first uplink signal has better fault tolerance, which helps improve accuracy of the determined downlink precoding matrix.

S514: The network device sends first data to the first UE. Correspondingly, the first UE receives the first data from the network device.

For a meaning of the first data, a manner in which the network device sends the first data to the first UE, and content that the first UE processes the first data, refer to the foregoing content. Details are not described herein again.

S515: The network device sends the first data to the second UE. Correspondingly, the second UE receives the first data from the network device.

For the meaning of the first data, a manner in which the network device sends the first data to the second UE, and content that the second UE processes the first data, refer to the foregoing content. Details are not described herein again.

S516: The first UE sends third response information to the network device. Correspondingly, the network device receives the third response information from the first UE.

For example, the third response information indicates whether one UE (for example, the second UE) in the plurality of UEs has successfully received the first data. That the second UE successfully receives the first data may be understood as that the UE receives the first data and successfully decodes the first data. That the second UE fails to receive the first data may be understood as that the UE fails to decode the first data.

For example, the third response information specifically indicates, for example, a NACK or an ACK. For example, the third response information may occupy 1 bit (bit). A value of the 1 bit is 1, indicating the NACK; or a value of the 1 bit is 0, indicating the ACK.

For another example, the third response information indicates whether both the first UE and the second UE successfully receive the first data. The first response information specifically indicates, for example, a negative acknowledgment or an acknowledgment in HARQ. The NACK indicates that at least one of the second UE and the first UE fails to receive the first data. The ACK indicates that both the second UE and the first UE successfully receive the first data.

In an example, the network device may specify one of the first UE and the second UE to send the third response information. In this embodiment of this application, an example in which the network device specifies the first UE to send the third response information is used. In this example, the first UE may receive second indication information from the network device, and determine that the first UE needs to send the third response information to the network device, where the second indication information indicates the first UE to send the third response information. In another example, the first UE and the second UE may negotiate to determine one of the first UE and the second UE to send the third response information. In this embodiment of this application, an example in which the first UE sends the third response information is used.

In case of different specific meanings of the third response information, the first UE determines the third response information in different manners. The following separately describes the manners.

1. The third response information indicates whether one UE (for example, the second UE) in the plurality of UEs has successfully received the first data.

In this embodiment of this application, an example in which the third response information indicates whether the second UE has successfully received the first data is used.

For example, the second UE is a UE whose channel quality is less than or equal to a first threshold in the plurality of UEs, or the second UE is a UE whose channel quality is less than or equal to a first threshold in the plurality of UEs. For specific content of the uplink channel quality, refer to the foregoing content. The channel quality may be specifically the uplink channel quality or the downlink channel quality. For content of the uplink channel quality, refer to the content of the uplink channel quality. For a manner of determining the downlink channel quality, refer to a manner of determining the uplink channel quality.

For example, the second indication information further indicates that the UE whose channel quality (for example, uplink channel quality or downlink channel quality) is less than or equal to the first threshold in the plurality of UEs is the second UE, so that after receiving the second indication information, the first UE may determine a specific UE for which response information is to be fed back. Alternatively, another UE in the plurality of UEs may feed back channel quality (for example, uplink channel quality or downlink channel quality) of the UE to the first UE, so that the first UE may determine, from the plurality of UEs, a UE (that is, the second UE) whose uplink channel quality is less than or equal to the first threshold, and determine to feed back response information corresponding to the second UE.

Alternatively, the network device sends third indication information to the second UE, and correspondingly, the second UE receives the third indication information from the network device. The third indication information indicates that channel quality of the second UE is less than or equal to the first threshold, so that the second UE may send response information for the second UE to the first UE. For ease of differentiation, the response information for the second UE is referred to as fourth response information herein.

Because the second UE is a UE whose uplink channel quality is poor in the plurality of UEs, if the second UE successfully receives the first data, it indicates that there is a high probability that both the first UE and the second UE successfully receive the first data. Therefore, when the third response information indicates that the second UE successfully receives the first data, the network device may determine that all the plurality of UEs successfully receive the first data. When the third response information indicates that the second UE fails to receive the first data, the network device may separately retransmit the first data to the second UE. In this case, the network device may retransmit the first data to the second UE in the unicast manner. Alternatively, when the third response information indicates that the second UE fails to receive the first data, the network device may retransmit the first data to all the plurality of UEs. In this case, the network device may retransmit the first data in the unicast manner or a multicast manner.

In this embodiment of this application, the first UE needs to feed back only response information corresponding to one UE, and does not need to feed back response information corresponding to each of the plurality of UEs. This helps reduce a quantity of bits occupied by the first response information fed back by the first UE, and reduces an amount of data exchanged between the first UE and the network device.

2. The third response information indicates whether both the first UE and the second UE successfully receive the first data.

The first UE may determine whether the first UE successfully receives the first data, and generate response information for the first UE. For ease of differentiation, the response information for the first UE is referred to as fifth response information herein. The first UE may obtain response information for the second UE from the second UE (the response information for the second UE may be referred to as fourth response information).

In an example, the first UE may send the fourth response information and the fifth response information to the network device as the third response information. In other words, the third response information includes the fourth response information and the fifth response information. After receiving the first response information, the network device may determine whether both the first UE and the second UE successfully receive the first data. If one or both of the first UE and the second UE fail to receive the first data, the network device may retransmit the first data to the UE that fails to receive the first data.

In another example, the first UE may perform a logical sum operation on the fourth response information and the fifth response information to generate the third response information, and send the third response information to the network device. In this case, the third response information may occupy only one bit. For example, a value of the fourth response information is 1, and a value of the fifth response information is 1. In this case, the first UE determines that a value of the third response information is 1.

In this example, if the network device determines that the third response information indicates that the plurality of UEs fail to receive the first data, the network device retransmits the first data to the plurality of UEs. The network device may retransmit the first data in the unicast manner or a multicast manner.

In an example, an example in which the first UE feeds back the third response information is used in the embodiment shown in FIG. 5. Actually, the plurality of UEs may feed back respective response information to the network device. For example, the first UE sends the fifth response information to the network device, and the second UE sends the fourth response information to the network device. In this case, S513 does not need to be performed, that is, S513 is an optional step.

In the embodiment shown in FIG. 5, the plurality of UEs may send uplink reference signals to the network device on a same resource, and the network device may determine one downlink precoding matrix based on the uplink reference signals from the plurality of UEs. In this way, the network device does not need to separately determine a downlink precoding matrix for each UE, which simplifies a calculation process in which the network device calculates the downlink precoding matrix and reduces calculation overheads. In addition, the plurality of UEs share one downlink precoding matrix, which helps reduce overheads of the downlink precoding matrix. In addition, the network device may further flexibly determine, based on uplink channel statuses of the plurality of UEs, powers at which the plurality of UEs send uplink reference signal sequences, to ensure that the plurality of UEs successfully send the uplink reference signal sequences. In addition, when sending the uplink reference signal sequences to the network device, the plurality of UEs may jump phases of the uplink reference signal sequences, so that a phase difference between uplink reference signal sequences received by the network device from any two of the plurality of UEs is variable, which helps the network device determine a downlink precoding matrix with better fault tolerance, and helps improve accuracy of the downlink precoding matrix. In addition, after the network device sends the first data to the plurality of UEs by using the downlink precoding matrix, one of the plurality of UEs may report one piece of response information to the network device, and not all the plurality of UEs need to report response information to the network device. This helps reduce a quantity of interactions between the network device and the UEs.

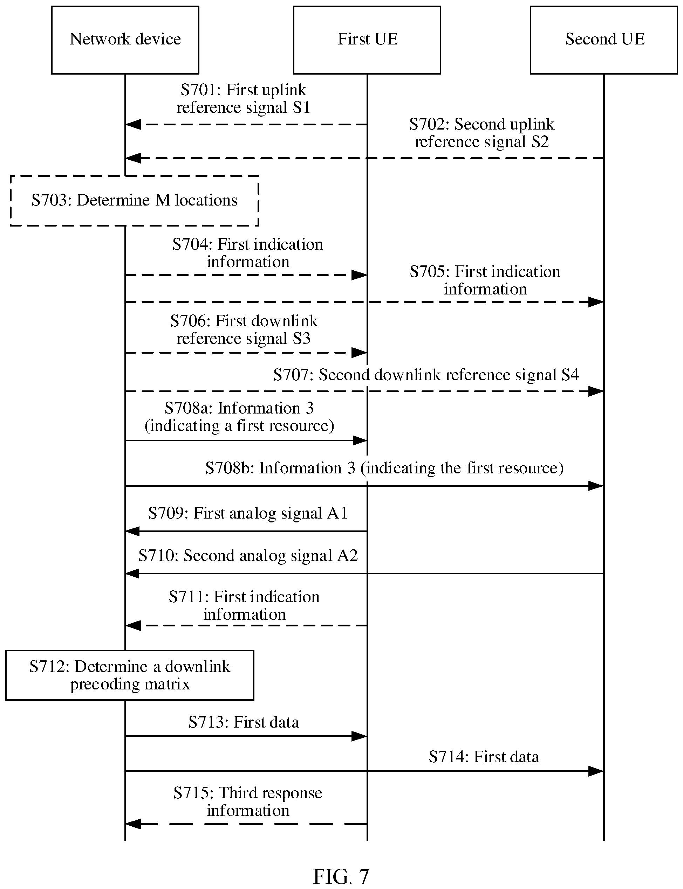

FIG. 7 is a schematic flowchart of a communication method. In the embodiment shown in FIG. 7, an example in which the first uplink signal U1 and the second uplink signal U2 in the embodiment shown in FIG. 2 are analog signals in the second possible implementation is used for description.

S701: A first UE sends a first uplink reference signal S1 to a network device. Correspondingly, the network device receives the first uplink reference signal S1 from the first UE. The first uplink reference signal S1 is, for example, an SRS.

S702: A second UE sends a second uplink reference signal S2 to the network device. Correspondingly, the network device receives the second uplink reference signal S2 from the second UE. The second uplink reference signal S2 is, for example, an SRS.

S703: The network device determines M locations.

The M locations are same M locations in a first matrix corresponding to the first UE and a first matrix corresponding to the second UE.

A location of a non-zero element in a second matrix for any UE is the same as a location of a non-zero element in a first matrix for the UE. Therefore, in this embodiment of this application, the network device may determine a second matrix for the first UE based on the first uplink reference signal S1, and determine a second matrix for the second UE based on the second uplink reference signal S2. The network device may determine the M locations based on a location of a non-zero element in the second matrix for the first UE (for brevity of description, the location of the non-zero element in the second matrix for the first UE is referred to as a first location set in this embodiment of this application) and a location of a non-zero element in the second matrix for the second UE (for brevity of description, the location of the non-zero element in the second matrix for the second UE is referred to as a second location set in this embodiment of this application).

In an example, both the first UE and the second UE correspond to P spatial layers. Correspondingly, the first UE may correspond to P second matrices, and the second UE may correspond to P second matrices. One of the P second matrices corresponding to the first UE corresponds to one of the P spatial layers corresponding to the first UE. One of the P second matrices corresponding to the second UE corresponds to one of the P spatial layers corresponding to the second UE. In this case, the network device may determine an uplink channel matrix for the first UE based on the first uplink reference signal S1. The network device determines a precoding matrix for the first UE based on the uplink channel matrix for the first UE, and then determines the second matrix for the first UE based on the precoding matrix for the first UE, that is, determines the location of the non-zero element in the second matrix for the first UE, which is equivalent to determining the first location set. For example, the network device performs eigenvalue decomposition or SVD on the uplink channel matrix for the first UE, or performs eigenvalue or SVD on a covariance matrix of the uplink channel matrix for the first UE, to obtain the second matrix for the first UE.

Similarly, the network device may also determine the location of the non-zero element in the second matrix for the second UE based on the uplink reference signal S2, which is equivalent to determining the second location set.

For example, the network device may determine a union set of the first location set and the second location set as the M locations. Alternatively, the network device may determine an intersection set of the first location set and the second location set as the M locations.

Optionally, the first location set may include a location of a non-zero element in a second matrix for the first UE at a $K^{th}$ spatial layer in the P spatial layers, and the second location set may include a location of a non-zero element in a second matrix for the second UE at a $K^{th}$ spatial layer in the P spatial layers. In this case, it is equivalent to that the network device determines the M locations based on the location of the non-zero element in the second matrix for the first UE at the $K^{th}$ spatial layer in the P spatial layers and the location of the non-zero element in the second matrix for the second UE at the $K^{th}$ spatial layer in the P spatial layers. K is a positive integer less than or equal to P. P is a positive integer.

The M locations determined in this case may be understood as corresponding to a first matrix for the first UE at the $K^{th}$ spatial layer in the P spatial layers and corresponding to a first matrix for the second UE at the $K^{th}$ spatial layer in the P spatial layers.

In another example, locations of non-zero elements in second matrices for the first UE at any two of P spatial layers are the same, and locations of non-zero elements in second matrices for the second UE at any two of P spatial layers are the same. In this case, the first location set may include locations of non-zero elements in P second matrices corresponding to the first UE, and the second location set may be understood as including locations of non-zero elements in P second matrices corresponding to the first UE. One second matrix corresponds to one spatial layer.

In this case, it is equivalent to that the M locations are determined based on locations of non-zero elements in second matrices for the first UE at the P spatial layers and locations of non-zero elements in second matrices for the second UE at the P spatial layers. The M locations determined in this case may be understood as corresponding to P first matrices corresponding to the first UE and corresponding to P first matrices corresponding to the second UE.

For example, the first location set includes a location of a non-zero element in a second matrix for the first UE at a $K^{th}$ spatial layer in the P spatial layers, and the second location set includes a location of a non-zero element in a second matrix for the second UE at a $K^{th}$ spatial layer in the P spatial layers. The first location set includes (1,1), (1,2), and (3,1), where (1,1) represents a 1st location in a 1st row in the second matrix for the first UE, (1,2) represents a 2nd location in the 1st row in the second matrix for the first UE, and (3,1) represents a 1st location in a 3rd row in the second matrix for the first UE. The second location set includes (1,2), (1,3), and (3,1), where (1,2) represents a 2nd location in a 1st row in the second matrix for the second UE, (1,3) represents a 3rd location in the 1st row in the second matrix for the second UE, and (3,1) represents a 1st location in a 3rd row in the second matrix for the second UE.

The network device may determine an intersection set of the first location set and the second location set as the M locations (that is, the M locations include (1,2) and (3,1)). Alternatively, the network device determines a union set of the first location set and the second location set as the M locations (that is, the M locations include (1,1), (1,2), (1,3), and (3,1)).

In another example, the first UE includes R antennas (or antenna ports), and the first UE corresponds to R second matrices. The second UE includes T antennas (or antenna ports), and the second UE corresponds to T second matrices. For values of T and R, refer to the foregoing descriptions. In this case, the network device may determine an uplink channel matrix for the first UE based on the first uplink reference signal S1. The network device determines, based on the uplink channel matrix for the first UE, at least one frequency domain vector corresponding to the uplink channel matrix, and determines at least one spatial domain vector corresponding to the uplink channel matrix, to determine, based on the at least one frequency domain vector (the at least one frequency domain vector forms a frequency domain matrix) and the at least one spatial domain vector (the at least one spatial domain vector forms a spatial domain matrix), a spatial-frequency combination coefficient matrix on one antenna (or antenna port), which is referred to as a second matrix. Similarly, the network device may determine a second matrix for the second UE on one antenna (or antenna port). In this case, the M locations may be determined based on a location of a non-zero element in the second matrix for the first UE on the one antenna (or antenna port) and a location of a non-zero element in the second matrix for the second UE on the one antenna (or antenna port).

For example, the M locations are an intersection set or a union set of the location of the non-zero element in the second matrix for the first UE on the one antenna (or antenna port) and the location of the non-zero element in the second matrix for the second UE on the one antenna (or antenna port).

It should be noted that S701 to S703 are a manner in which the network device determines the M locations. Actually, the network device alternatively determines the M locations in a plurality of manners. This is not specifically limited in this embodiment of this application.

S704: The network device sends first indication information to the first UE. Correspondingly, the first UE receives the first indication information from the network device. The first indication information indicates the M locations.

The first indication information may implicitly indicate the M locations, or explicitly indicate the M locations.

S705: The network device sends the first indication information to the second UE. Correspondingly, the second UE receives the first indication information from the network device. For a meaning of the first indication information, refer to the foregoing content.

It should be noted that S701 to S705 are a manner in which the first UE and the second UE obtain the M locations. Actually, the first UE and the second UE alternatively obtain the M locations in a plurality of manners. When the first UE and the second UE obtain the M locations in another manner, S701 to S705 do not need to be performed, that is, S701 to S705 are optional steps.

S706: The network device sends a first downlink reference signal S3 to the first UE. Correspondingly, the first UE receives the first downlink reference signal S3 from the network device. The first downlink reference signal S3 is, for example, a CSI-RS.

S707: The network device sends a second downlink reference signal S4 to the second UE. Correspondingly, the second UE receives the second downlink reference signal S4 from the network device. The second downlink reference signal S4 is, for example, a CSI-RS.

S708: The network device sends information 3. Correspondingly, a plurality of UEs receive the information 3. The information 3 indicates a first resource. The information 3 may also be referred to as fifth information.

For content of the information 3 and the first resource, refer to the foregoing descriptions.

The network device may send the information 3 to the plurality of UEs in a multicast manner or a unicast manner. When the network device sends the information 3 to the plurality of UEs in the multicast manner, S708 may include S708a and S708b. S708a is that the network device sends the information 3 to the first UE, and correspondingly, the first UE receives the information 3 from the network device. S708b is that the network device sends the information 3 to the second UE, and correspondingly, the second UE receives the information 3 from the network device.

S709: The first UE sends a first analog signal A1 to the network device on the first resource. Correspondingly, the network device receives the first analog signal A1 from the first UE on the first resource. The first analog signal A1 in this embodiment of this application is an example of the first uplink signal U1 sent by the first UE.

The first analog signal A1 indicates M elements in the first matrix for the first UE. The M elements are M elements at the M locations in the first matrix for the first UE.

For example, the first UE determines the first matrix for the first UE based on the first downlink reference signal S3. For a manner in which the first UE determines the first matrix for the first UE, refer to the foregoing content that the network device determines a second matrix for the first UE based on an uplink reference signal. Details are not described herein again.

Before the first UE sends the first analog signal A1 to the network device, the first UE may obtain the M locations. The following describes a manner in which the first UE determines the M locations.

Manner 1: As shown in S704 above, the first UE may receive the first indication information from the network device. This is equivalent to that the first UE obtains the M locations.

Manner 2: The first UE may determine the M locations.

Specifically, the first UE determines a location of a non-zero element in the first matrix for the first UE. For brevity of description, the location of the non-zero element in the first matrix for the first UE is referred to as a third location set in this embodiment of this application. The first UE may receive a location of a non-zero element in the first matrix for the second UE from the second UE. For brevity of description, the location of the non-zero element in the first matrix for the second UE is referred to as a fourth location set in this embodiment of this application. The first UE determines the M locations based on the third location set and the fourth location set. For a manner in which the second UE determines the first matrix for the second UE, refer to the foregoing content that the network device determines the second matrix for the first UE based on the uplink reference signal. Details are not described herein again.

For example, the network device may determine a union set of the third location set and the fourth location set as the M locations. Alternatively, the network device may determine an intersection set of the third location set and the fourth location set as the M locations.

When both the first UE and the second UE correspond to P spatial layers, the first UE corresponds to P first matrices, where one first matrix for the first UE corresponds to one of the P spatial layers; and the second UE corresponds to P first matrices, where one first matrix for the second UE corresponds to one of the P spatial layers.

In an example, the third location set may include a location of a non-zero element in a first matrix for the first UE at the $K^{th}$ spatial layer in the P spatial layers, and correspondingly, the fourth location set may include a location of a non-zero element in a first matrix for the second UE at the $K^{th}$ spatial layer in the P spatial layers. In this case, the first UE may separately determine P groups of M locations, where one group of M locations is determined based on a non-zero element in a first matrix for the first UE at one of the P spatial layers and a non-zero element in a first matrix for the second UE at one of the P spatial layers.

In another example, when locations of non-zero elements in any two of the P first matrices for the first UE are the same, and locations of non-zero elements in any two of the P first matrices for the second UE are the same, the third location set may include locations of non-zero elements in the P first matrices for the first UE, and the fourth location set may include non-zero elements in the P first matrices of the second UE. In this case, the network device may determine one group of M locations, and the M locations are determined based on locations of non-zero elements in first matrices for the first UE at the P spatial layers and locations of non-zero elements in first matrices for the second UE at the P spatial layers.

In another example, the third location set may include a location of a non-zero element in a first matrix for the first UE on one antenna (or antenna port), and correspondingly, the fourth location set may include a location of a non-zero element in a first matrix for the second UE on one antenna (or antenna port). In this case, the network device may determine the M locations based on the location of the non-zero element in the first matrix for the first UE on the one antenna (or antenna port) and the location of the non-zero element in the first matrix for the second UE on the one antenna (or antenna port).

Manner 3: The first UE may be preconfigured with the M locations. For example, the first UE may be configured with the M locations by using a protocol.

When the first UE determines the M locations, the first UE may further send first indication information to the second UE, where the first indication information indicates the M locations.

In another possible implementation, the second UE may determine the M locations. For a manner in which the second UE determines the M locations, refer to the manner in which the first UE determines the M locations. In this case, the second UE may send first indication information to the first UE, to indicate the M locations. This is equivalent to that the first UE obtains the M locations.

S710: The second UE sends a second analog signal A2 to the network device on the first resource. Correspondingly, the network device receives the second analog signal A2 from the second UE on the first resource. The second analog signal A2 in this embodiment of this application is an example of the second uplink signal U2 sent by the second UE.

The second analog signal A2 indicates M elements in the first matrix for the second UE. The M elements are M elements corresponding to the M locations in the first matrix for the second UE.

In an example, both the first analog signal A1 and the second analog signal A2 are sent on the first resource, so that the first analog signal A1 and the second analog signal A2 may be superposed on the first resource. In this embodiment of this application, a superposition result of the first analog signal A1 and the second analog signal A2 on the first resource is referred to as a third analog signal A3. The third analog signal A3 includes one or more of a third superposition result, a fourth superposition result, and a fifth superposition result. The third superposition result is a superposition result of the first analog signal A1 and the second analog signal A2 in frequency domain or time domain. The second superposition result is a superposition result of the first analog signal A1 and the second analog signal A2 in antenna domain or beam. The third superposition result is a superposition result of the first analog signal A1 and the second analog signal A2 in code domain. Optionally, both the first analog signal A1 and the second analog signal A2 may be represented in a form of a complex number in frequency domain, time domain, antenna domain, beam domain, or code domain. In this case, the third analog signal A3 may be considered as a sum of the two complex numbers. The third analog signal A3 is equivalent to an example of the foregoing third uplink signal U3. In this case, it is equivalent to that the network device receives the third analog signal A3.

Optionally, both the first analog signal A1 and the second analog signal A2 may be represented in the form of the complex number (specifically, for example, a complex vector or a complex matrix) in frequency domain, time domain, antenna domain, beam domain, or code domain. In this case, the third analog signal A3 may be considered as the sum of the two complex numbers. If the first analog signal A1 and the second analog signal A2 are complex vectors, the third analog signal A3 is correspondingly a complex vector; or if the first analog signal A1 and the second analog signal A2 are complex matrices, the third analog signal A3 is correspondingly a complex matrix.

S711: The first UE sends first indication information to the network device. Correspondingly, the network device receives the first indication information from the first UE.

When the first UE determines the M locations, the first UE may perform S711.

In an example, when S701 to S704 are performed, S711 does not need to be performed, that is, S711 is an optional step. Alternatively, when S711 is performed, steps S701 to S704 do not need to be performed.

In another example, when the first UE obtains the M locations in Manner 3, S701 to S704 and S711 do not need to be performed, that is, S701 to S704 and S711 are all optional steps.

When the M locations are the intersection set of the third location set and the fourth location set, or the M locations are the intersection set of the first location set and the second location set, even if the network device receives the first analog signal A1 and the second analog signal A2, the network device may not be able to obtain locations of all non-zero elements in the first matrices for the first UE and the second UE. Therefore, in this embodiment of this application, the first UE may further send sixth information to the network device, and/or the second UE may send seventh information to the network device. Optionally, the sixth information and the seventh information may be digital signals.

The sixth information indicates a fifth location set and an element in the fifth location set. Similarly, the seventh information indicates a sixth location set and an element in the sixth location set. The fifth location set includes a location other than the M locations in the location of the non-zero element in the first matrix for the first UE. The sixth location set includes a location other than the M locations in the location of the non-zero element in the first matrix for the second UE.

In an example, when both the first UE and the second UE correspond to P spatial layers, the first analog signal A1 indicates M elements in the first matrix for the first UE at the $K^{th}$ spatial layer in the P spatial layers, and the second analog signal A2 indicates M elements of the second UE at the $K^{th}$ spatial layer in the P spatial layers, the fifth location set may specifically include a location other than the M locations in the location of the non-zero elements in the first matrix for the first UE at the $K^{th}$ spatial layer. Similarly, the sixth location set may specifically include a location other than the M locations in the location of the non-zero element in the first matrix for the second UE at the $K^{th}$ spatial layer.

In another example, when the first UE corresponds to R antennas (or antenna ports), the second UE corresponds to T antennas (or antenna ports), the first analog signal A1 indicates M elements in a first matrix for the first UE on one antenna (or antenna port) in the R antennas (or antenna ports), and the second analog signal A2 indicates M elements in a first matrix for the second UE on one antenna (or antenna port) in the R antennas (or antenna ports), the fifth location set may specifically include a location other than the M locations in a location of a non-zero element in the first matrix for the first UE on the one antenna (or antenna port) in the R antennas (or antenna ports). Similarly, the sixth location set may specifically include a location other than the M locations in a location of a non-zero element in the first matrix for the second UE on the one antenna (or antenna port) in the T antennas (or antenna ports).

S712: The network device determines a downlink precoding matrix.

In an example, the network device may determine the downlink precoding matrix based on the first analog signal A1 and the second analog signal A2. For a manner of determining the downlink precoding matrix, refer to the foregoing content of determining the downlink precoding matrix in FIG. 2.

In another example, when the network device receives the sixth information from the first UE, and/or the network device receives the seventh information from the second UE, the network device may determine a third matrix based on the first analog signal A1, the second analog signal A2, and the sixth information and/or the seventh information. In this case, elements at M locations in the third matrix are respectively M summation results. In addition, an element at each location in the fifth location set in the third matrix is correspondingly an element indicated by the sixth information, and/or an element at each location in the sixth location set in the third matrix is correspondingly an element indicated by the seventh information. In this example, the network device can obtain a third matrix with more complete information, which also helps the network device determine a more accurate downlink precoding matrix.

S713: The network device sends first data to the first UE. Correspondingly, the first UE receives the first data from the network device.

For a manner in which the network device sends the first data to the first UE and content of the first data, refer to the foregoing content in FIG. 2. Details are not described herein again.

S714: The network device sends the first data to the second UE. Correspondingly, the second UE receives the first data from the network device.

For a manner in which the network device sends the first data to the second UE, refer to the foregoing content in FIG. 2. Details are not described herein again.

S715: The first UE sends third response information to the network device. Correspondingly, the network device receives the third response information from the first UE.

For a determining manner of the first UE, a meaning of the third response information, a manner in which the first UE determines the third response information, and a manner in which the network device retransmits the first data after receiving the third response information, refer to the foregoing content in FIG. 5. Details are not described herein again.

In an example, S715 is an optional step.

In the embodiment shown in FIG. 7, the network device may determine, based on analog signals sent by the plurality of UEs, one downlink precoding matrix shared by the plurality of UEs. Because the plurality of UEs do not need to quantize elements at M locations in first matrices, not only is processing of the plurality of UEs reduced, but also an information quantization loss caused by a process in which the plurality of UEs quantize the elements at the M locations in the first matrices is reduced. This helps the network device determine a more accurate downlink precoding matrix. In addition, the downlink precoding matrix determined by the network device is shared by the plurality of UEs, which helps reduce overheads of the downlink precoding matrix. In addition, the network device does not need to determine a downlink precoding matrix for each of the plurality of UEs, so that a process in which the network device determines the downlink precoding matrix can be simplified, and calculation overheads of the network device can be reduced. In addition, all the plurality of UEs send the analog signals on the first resource, which helps reduce resource overheads for sending the analog signals by the plurality of UEs, and helps the network device receive the analog signals from the plurality of UEs. In addition, the plurality of UEs need to report only some elements in the first matrices for the plurality of UEs, and do not need to report the first matrices separately, so that an amount of data reported by the plurality of UEs can be reduced, and resource overheads required by the plurality of UEs for reporting are reduced.

To simplify a calculation process of determining a precoding matrix, an embodiment of this application further provides a communication method. In the method, one terminal device (for example, a first terminal device) in a plurality of terminal devices may determine M summation results of first matrices for the plurality of terminal devices, and then determine a precoding matrix indicator based on the M summation results. A network device may determine a downlink precoding matrix based on the precoding matrix indicator. This simplifies a process in which the network device calculates downlink precoding matrices for the plurality of terminal devices, and reduces calculation overheads of the network device. In addition, the plurality of terminal devices share one downlink precoding matrix, so that resource overheads for precoding matrices for the plurality of terminal devices are reduced. In addition, only one terminal device in the plurality of terminal devices needs to report one precoding matrix indicator, and the plurality of terminal devices do not need to separately report respective precoding matrices, so that overheads of reporting the precoding matrices by the plurality of terminal devices are reduced.

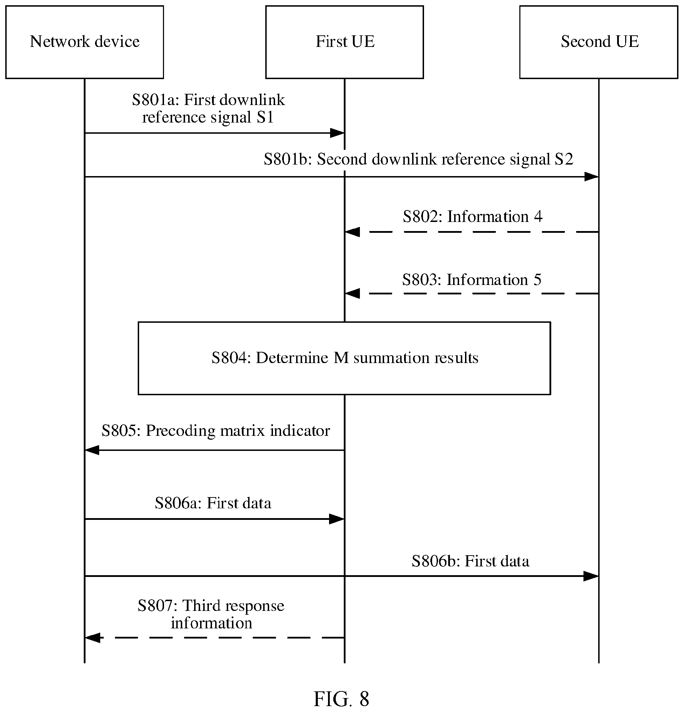

FIG. 8 is a schematic flowchart of the method. The method in the embodiment shown in FIG. 8 may be applied to the scenario shown in FIG. 1. In the embodiment shown in FIG. 8, a plurality of UEs include a first UE and a second UE. The first UE and the second UE are, for example, any terminal device 110 shown in FIG. 1. In addition, an example in which a UE group includes the first UE and the second UE is also used for description in the embodiment shown in FIG. 8. The network device in the embodiment shown in FIG. 8 is, for example, the network device 120 shown in FIG. 1.

S801: The network device sends a downlink reference signal. Correspondingly, the plurality of UEs receive the downlink reference signal. The downlink reference signal is, for example, a CSI-RS.

In an example, the network device may separately send the downlink reference signal to the first UE and the second UE in a unicast manner. In the unicast manner, S801 may include S801a and S801b. S801a is that the network device sends a first downlink reference signal S1 to the first UE, and correspondingly, the first UE receives the first downlink reference signal S1 from the network device. S801b is that the network device sends a second downlink reference signal S2 to the second UE, and correspondingly, the second UE receives the second downlink reference signal S2 from the network device.

In another example, the network device may send the downlink reference signal to the UE group in a multicast manner (in this embodiment of this application, an example in which the UE group includes the first UE and the second UE is used). For content of sending the downlink reference signal in the multicast manner, refer to the foregoing content. Details are not described herein again.

S802: The second UE sends information 4 to the first UE. Correspondingly, the first UE receives the information 4 from the second UE. The information 4 indicates a non-zero element in a first matrix for the second UE and a location of the non-zero element in the first matrix for the second UE. The information 4 may also be referred to as second information.

The second UE may determine the first matrix for the second UE based on the second downlink reference signal S2. For a manner in which the second UE determines the first matrix, refer to the foregoing content in FIG. 7. Details are not described herein again. The second UE may determine the non-zero element in the first matrix and the location of the non-zero element, and send the information 4 to the first UE.

Similarly, the first UE may determine a location of a non-zero element in a first matrix for the first UE.

The first UE may determine M locations based on the location of the non-zero element in the first matrix for the first UE and the location of the non-zero element in the first matrix for the second UE. For example, the first UE determines a union set of the location of the non-zero element in the first matrix for the first UE and the location of the non-zero element in the first matrix for the second UE as the M locations. Alternatively, the first UE determines an intersection set of the location of the non-zero element in the first matrix for the first UE and the location of the non-zero element in the first matrix for the second UE as the M locations. Correspondingly, the first UE obtains M elements at the M locations in the first matrix for the second UE and M elements at the M locations in the first matrix for the first UE.

In an example, when both the first UE and the second UE correspond to P spatial layers, and the first UE and the second UE each correspond to P first matrices, the first UE may determine the M locations based on a location of a non-zero element in a first matrix for the first UE at a $K^{th}$ spatial layer in the P spatial layers and a location of a non-zero element in a first matrix for the second UE at a $K^{th}$ spatial layer in the P spatial layers. The M locations are, for example, an intersection set or a union set of the location of the non-zero element in the first matrix for the first UE at the $K^{th}$ spatial layer in the P spatial layers and the location of the non-zero element in the first matrix for the second UE at the $K^{th}$ spatial layer in the P spatial layers.

In another example, when the first UE includes R antennas (or antenna ports), the first UE corresponds to R first matrices, the second UE includes T antennas (or antenna ports), and the second UE corresponds to T first matrices, for values of T and R, refer to the foregoing content. The first UE may determine the M locations based on a location of a non-zero element in a first matrix for the first UE on one antenna (or antenna port) and a location of a non-zero element in a first matrix for the second UE on one antenna (or antenna port). The M locations are, for example, an intersection set or a union set of the location of the non-zero element in the first matrix for the first UE at the $K^{th}$ spatial layer in the P spatial layers and the location of the non-zero element in the first matrix for the second UE at the $K^{th}$ spatial layer in the P spatial layers.

S803: The second UE sends information 5 to the first UE. Correspondingly, the first UE receives the information 5 from the second UE. The information 5 indicates M elements in the first matrix for the second UE. The M elements correspond to the M locations in the first matrix for the second UE.

In the embodiment shown in S803, the first UE and the second UE may determine the M locations in advance, and the second UE may directly feed back, to the first UE, the M elements in the first matrix for the second UE. In this case, the M locations may be fed back by the first UE to the second UE, determined by the second UE, or obtained by the first UE and the second UE from the network device. For a manner in which the network device determines the M locations and a manner in which the first UE or the second UE determines the M locations, refer to the foregoing content.

It should be noted that S802 and S803 are two manners in which the first UE determines M elements for the plurality of UEs. When S802 is performed, S803 does not need to be performed; or when S803 is performed, S802 does not need to be performed.

S804: The first UE determines M summation results.

After obtaining the elements at the M locations in the first matrix for the first UE and the elements at the M locations in the first matrix for the second UE, the first UE may determine the M summation results. For meanings of the M summation results and a manner of determining the M summation results, refer to the foregoing content.

In an example, when both the first UE and the second UE correspond to P spatial layers, and the M locations correspond to the P first matrices for the first UE and P second matrices for the second UE, the first UE may determine, in the foregoing manner, M summation results corresponding to each of the P spatial layers. For a meaning that the M locations correspond to the P first matrices for the first UE and the P second matrices for the second UE, refer to the foregoing content.

S805: The first UE sends a precoding matrix indicator to the network device. Correspondingly, the network device receives the precoding matrix indicator from the first UE.

The first UE may directly determine the precoding matrix indicator based on the M summation results.

For example, the first UE may determine a third matrix based on the M summation results. Further, the first UE may determine the precoding matrix indicator based on the third matrix, and send the precoding matrix indicator to the network device. For example, the first UE may quantize the third matrix to obtain the precoding matrix indicator.

In an example, when the first UE may determine the M locations based on the location of the non-zero element in the first matrix for the first UE at the $K^{th}$ spatial layer in the P spatial layers and the location of the non-zero element in the first matrix for the second UE at the $K^{th}$ spatial layer in the P spatial layers, the third matrix determined by the first UE based on the M summation results may be considered as a spatial-frequency combination coefficient matrix at one spatial layer.

In another example, when the first UE includes the R antennas (or antenna ports), and the second UE includes the T antennas (or antenna ports), the third matrix determined by the first UE based on the M summation results may be considered as a spatial-frequency combination coefficient matrix on one antenna (or antenna port).

Correspondingly, after obtaining the precoding matrix indicator, the network device may obtain the third matrix, and may further determine the downlink precoding matrix based on the third matrix. For content that the network device determines the downlink precoding matrix based on the third matrix, refer to the foregoing content in FIG. 2.

S806: The network device sends first data. Correspondingly, the plurality of UEs receive the first data from the network device.

For a meaning of the first data and a manner in which the network device sends the first data, refer to the foregoing descriptions.

After receiving the precoding matrix indicator, the network device may determine the third matrix, then determine the downlink precoding matrix based on the third matrix, and precode to-be-sent data by using the downlink precoding matrix, to obtain the first data. For content that the network device determines the downlink precoding matrix based on the third matrix, refer to the foregoing content.

When the network device sends the first data to the plurality of UEs in the unicast manner, S806 includes S806a and S806b. S806a is that the network device sends the first data to the first UE, and correspondingly, the first UE receives the first data from the network device. S806b is that the network device sends the first data to the second UE, and correspondingly, the second UE receives the first data from the network device.

Certainly, the network device may send the first data to the plurality of UEs in the multicast manner. For specific content of multicast, refer to the foregoing descriptions. Details are not described herein again.

S807: The first UE sends third response information to the network device. Correspondingly, the network device receives the third response information from the first UE.

For a meaning of the third response information, a manner in which the first UE determines the third response information, a determining manner of the first UE, and content that the network device retransmits the first data after receiving the third response information, refer to the foregoing content in FIG. 5. Details are not described herein again.

In the embodiment shown in FIG. 8, one UE (for example, the first UE) in the plurality of UEs may directly determine the downlink precoding matrix based on the M summation results, then determine the precoding matrix indicator, and feed back the precoding matrix indicator to the network device, so that the network device can determine the precoding matrix based on the first downlink precoding indicator. In this manner, the network device does not need to calculate the downlink precoding matrix, so that a calculation amount of the network device is reduced. In addition, the downlink precoding matrix is shared by the plurality of UEs, so that consumption of the precoding matrix is reduced. In addition, in the embodiment shown in FIG. 8, the first UE needs to feed back only the precoding matrix indicator to the network device, instead of each UE reporting a precoding matrix to the network device, and then the network device can determine downlink precoding matrices of the plurality of UEs, so that resource overheads required for reporting a precoding matrix are reduced.

It should be noted that an example in which the plurality of UEs include two UEs is used for description in embodiments of this application (the embodiment shown in FIG. 2, FIG. 5, FIG. 7, or FIG. 8). Actually, a quantity of the plurality of UEs may be two or more. When the plurality of UEs include more than two UEs, a process of performing the communication method is similar to the foregoing process of performing the communication method. Details are not described herein again.

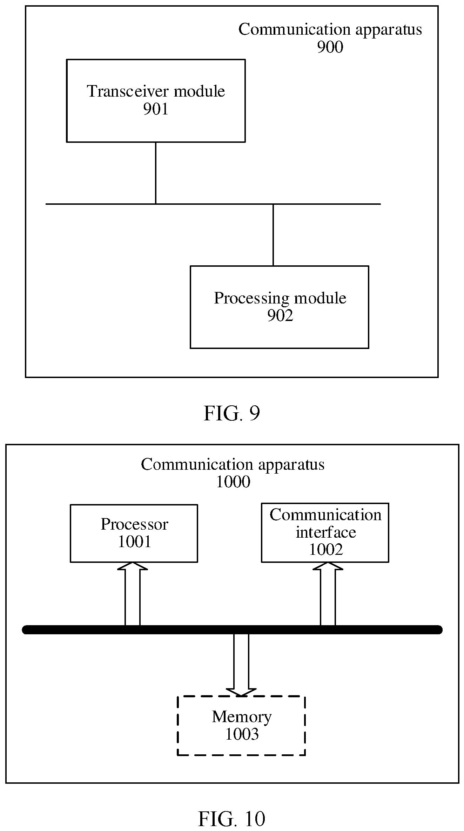

FIG. 9 is a diagram of a structure of a communication apparatus according to an embodiment of this application. As shown in FIG. 9, the communication apparatus 900 includes a transceiver module 901 and a processing module 902. The transceiver module 901 and the processing module 902 may be coupled.

In a first embodiment, the communication apparatus 900 may be configured to implement a function of the foregoing network device, for example, a function of the network device in FIG. 2, FIG. 5, or FIG. 7.

For example, the transceiver module 901 is configured to perform S202 of receiving uplink signals from a plurality of UEs. The processing module 902 is configured to perform step S203.

For another example, the transceiver module 901 is configured to receive a first uplink reference signal sequence S5 from a first UE and a second uplink reference signal sequence S6 from a second UE. The processing module 902 is configured to perform step S513.

For another example, the transceiver module 901 is configured to receive an analog signal A1 from a first UE and an analog signal A2 from a second UE. The processing module 902 is configured to perform step S712.

In a second embodiment, the communication apparatus 900 may be configured to implement a function of the foregoing network device, for example, a function of the network device in FIG. 8.

For example, the transceiver module 901 is configured to perform step S805 under control of the processing module 902.

In a third embodiment, the communication apparatus 900 may be configured to implement a function of the foregoing terminal device, for example, a function of any UE in FIG. 2.

For example, the transceiver module 901 is configured to perform, under control of the processing module 902, S202a of sending an uplink signal to a network device.

In a fourth embodiment, the communication apparatus 900 may be configured to implement a function of the foregoing terminal device, for example, a function of any UE in FIG. 5.

For example, the transceiver module 901 is configured to perform, under control of the processing module 902, S509 of sending a first uplink reference signal sequence S5 to a network device. For example, the processing module 902 is further configured to determine M locations. For meanings of the M locations and a specific manner of determining the M locations, refer to the foregoing descriptions.

In a fifth embodiment, the communication apparatus 900 may be configured to implement a function of the foregoing terminal device, for example, a function of any UE in FIG. 7.

For example, the transceiver module 901 is configured to perform, under control of the processing module 902, S709 of sending an analog signal A1 to a network device. For example, the processing module 902 is further configured to determine M locations. For meanings of the M locations and a specific manner of determining the M locations, refer to the foregoing descriptions.

In a sixth embodiment, the communication apparatus 900 may be configured to implement a function of the foregoing terminal device, for example, a function of any UE in FIG. 8.

For example, the transceiver module 901 is configured to send a precoding matrix indicator to a network device. The processing module 902 is configured to determine M summation results.

FIG. 10 is a diagram of a structure of a communication apparatus according to an embodiment of this application. As shown in FIG. 10, the communication apparatus 1000 includes a processor 1001 and a communication interface 1002.

The processor 1001 and the communication interface 1002 are coupled to each other. It may be understood that the communication interface 1002 may be a transceiver or an input/output interface. The processor 1001 and the communication interface 1002 may implement any one of the foregoing communication methods.

Optionally, the communication apparatus 1000 may further include a memory 1003, which is shown in a dashed box in FIG. 10. The memory 1003 is configured to store instructions executed by the processor 1001, store input data required by the processor 1001 to run instructions, and/or store data generated after the processor 1001 runs instructions. The memory 1003 may also be integrated with the memory 1003.

The memory 1003 and the communication interface 1002 are connected to each other via a bus. The bus is represented by a thick line in FIG. 10. A manner of connection between other components is merely an example for description, and is not limited thereto. The bus may be classified into an address bus, a data bus, a control bus, and the like. For ease of representation, only one thick line is for representing the bus in FIG. 10, but this does not mean that there is only one bus or only one type of bus.

In an embodiment, the communication apparatus 1000 may be configured to implement a function of the foregoing network device, and may specifically implement the steps implemented by the foregoing network device.

In another embodiment, the communication apparatus 1000 may be configured to implement a function of the foregoing terminal device, and may specifically implement the steps implemented by the foregoing terminal device.

Optionally, the processor 1001 is configured to implement a function of the processing module 902, and the communication interface 1002 is configured to implement a function of the transceiver module 901.

It may be understood that the processor 1001 in this embodiment of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any regular processor.

It should be understood that the memory 1003 mentioned in this embodiment of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), which is used as an external cache. By way of example, and not limitation, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor 1001 is a general-purpose processor, a DSP, an ASIC, an FPGA or another programmable logic device, a discrete gate or a transistor logic device, or a discrete hardware component, the memory (a storage module) may be integrated into the processor.

An embodiment of this application provides a communication system. The communication system includes the network device and the terminal device described above. The terminal device is a UE 1 and a UE 2 described above. Correspondingly, the communication system may also implement any one of the foregoing communication methods. For structures of the network device and the terminal device, refer to the structure of the communication apparatus shown in FIG. 9. Alternatively, for structures of the network device and the terminal device, refer to the structure of the communication apparatus shown in FIG. 10.

An embodiment of this application provides a chip system. The chip system includes a processor and an interface. The processor is configured to invoke instructions from the interface and run the instructions. When the processor executes the instructions, any one of the foregoing communication methods is implemented. The chip system may be configured to implement a function of the foregoing network device. Alternatively, the chip system is configured to implement a function of the foregoing terminal device.

An embodiment of this application provides a computer-readable storage medium. The computer-readable storage medium is configured to store a computer program or instructions. When the computer program or the instructions are run, any one of the foregoing communication methods is implemented.

An embodiment of this application provides a computer program product including instructions. When the computer program product is run on a computer, any one of the foregoing communication methods is implemented.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to the processor, so that the processor can read information from the storage medium and write information into the storage medium. Certainly, the storage medium may be a component of the processor. The processor and the storage medium may be located in an ASIC. In addition, the ASIC may be located in a base station or a terminal. Certainly, the processor and the storage medium may exist in a base station or a terminal as discrete components.

All or some of the foregoing embodiments may be implemented by software, hardware, firmware, or any combination thereof. When software is used to implement the foregoing embodiments, all or some of the foregoing embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, a user equipment, or another programmable apparatus. The computer programs or the instructions may be stored in a computer-readable storage medium, or may be transmitted from a computer-readable storage medium to another computer-readable storage medium. For example, the computer programs or the instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; may be an optical medium, for example, a digital video disc; or may be a semiconductor medium, for example, a solid state disk. The computer-readable storage medium may be a volatile or nonvolatile storage medium, or may include two types of storage media: a volatile storage medium and a nonvolatile storage medium.

In embodiments of this application, unless otherwise stated or if there is a logic conflict, terms and/or descriptions in different embodiments are consistent and may be mutually referenced, and technical features in different embodiments may be combined into a new embodiment based on an internal logical relationship thereof.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A communication method, applied to a network device, wherein the method comprises:

   receiving a plurality of uplink signals from a plurality of terminal devices on a first resource, wherein each uplink signal is from one of the plurality of terminal devices; and
   determining a downlink precoding matrix based on the plurality of uplink signals, wherein the downlink precoding matrix is used to send data to the plurality of terminal devices.

2. The method according to claim 1, wherein

   the plurality of uplink signals are reference signals; or
   the plurality of uplink signals are analog signals, each of the plurality of terminal devices corresponds to one first matrix, each first matrix comprises at least one zero element and/or at least one non-zero element, each non-zero element is a combination coefficient, the combination coefficient is a combination coefficient of a spatial domain vector and a frequency domain vector, each uplink signal indicates M elements, the M elements are M elements in a first matrix corresponding to a terminal device that sends the uplink signal, the M elements are at M locations in the first matrix, the M locations are different, and M is a positive integer.

3. The method according to claim 2, wherein respective M elements indicated by any two of the plurality of uplink signals are at same M locations in the first matrices.

4. The method according to claim 3, wherein the determining a downlink precoding matrix based on the plurality of uplink signals comprises:

   determining M summation results based on the plurality of uplink signals, wherein each summation result is a sum of a plurality of elements, the plurality of elements are in one-to-one correspondence with the plurality of uplink signals, each of the plurality of elements is one of M elements indicated by a corresponding uplink signal, and any two of the plurality of elements are at same locations in first matrices respectively corresponding to the two elements; and

determining the downlink precoding matrix based on the M summation results and the M locations.

5. The method according to claim 3 or 4, wherein the method further comprises:
receiving first indication information from a first terminal device, wherein the first indication information indicates the M locations, and the first terminal device is one of the plurality of terminal devices.

6. The method according to claim 3 or 4, wherein the method further comprises:
sending first indication information to the plurality of terminal devices, wherein the first indication information indicates the M locations.

7. The method according to claim 6, wherein each of the plurality of terminal devices corresponds to one second matrix, each second matrix comprises at least one zero element and/or at least one non-zero element, each non-zero element is a combination coefficient, the combination coefficient is a combination coefficient of a spatial domain vector and a frequency domain vector, and the M locations are determined based on locations of non-zero elements in a plurality of second matrices corresponding to the plurality of terminal devices.

8. The method according to any one of claims 1 to 7, wherein the method further comprises:
determining at least one power control parameter based on channel quality of some or all of the plurality of terminal devices, wherein the at least one power control parameter corresponds to at least one of the plurality of terminal devices, each power control parameter in the at least one power control parameter is a power control parameter configured for one terminal device in the at least one terminal device, and the power control parameter is used to determine the power for sending the uplink signal.

9. The method according to claim 8, wherein the method further comprises:
separately sending first information to the at least one terminal device, wherein the first information indicates the power control parameter corresponding to the terminal device that receives the first information.

10. The method according to any one of claims 1 to 9, wherein the method further comprises:
separately sending first data to the plurality of terminal devices based on the downlink precoding matrix, wherein a same modulation and coding scheme is used to send the first data to the plurality of terminal devices.

11. The method according to claim 10, wherein the method further comprises:
receiving response information from the first terminal device, wherein the response information indicates whether a second terminal device successfully receives the first data, or indicates whether all the plurality of terminal devices successfully receive the first data, and the second terminal device is one of the plurality of terminal devices.

12. The method according to claim 11, wherein channel quality of the second terminal device is less than or equal to a first threshold.

13. The method according to claim 11 or 12, wherein the method further comprises:
sending second indication information to the first terminal device, wherein the second indication information indicates the first terminal device to send the response information to the network device.

14. The method according to any one of claims 1 to 13, wherein the method further comprises:
determining that a channel correlation between any two of the plurality of terminal devices is greater than or equal to a second threshold.

15. The method according to any one of claims 1 to 14, wherein the method further comprises:
determining that data to be transmitted to the plurality of terminal devices corresponds to a same application.

16. A communication method, applied to a first terminal device, wherein the method comprises:

sending a first uplink signal sequence to a network device, wherein the first uplink signal sequence occupies a plurality of resource elements in frequency domain; and

sending a second uplink signal sequence to the network device, wherein the second uplink signal sequence occupies a plurality of resource elements in frequency domain, a phase difference between the first uplink signal sequence and the second uplink signal sequence on resource elements with a same index value is not $2n\pi$, n is an integer, a difference between a phase difference of the first uplink signal sequence on a resource element with a first index value and a resource element with a second index value and a phase difference of the second uplink signal sequence on a resource element with the first index value and a resource element with the second index value is $2m\pi$, and m is an integer.

17. The method according to claim 16, wherein the method further comprises:
receiving first information from the network device, wherein the first information indicates a power control parameter of the first terminal device, and the power control parameter is used to determine a power at which the first terminal device sends the first uplink signal sequence and/or the second uplink signal sequence.

18. A communication method, applied to a first terminal device, wherein the method comprises:

determining M elements in a first matrix corresponding to the first terminal device, wherein the M elements are at M locations in the first matrix, the M locations are different, the first matrix comprises at least one zero element and/or at least one non-zero element, each non-zero element is a combination coefficient, the combination coefficient is a combination coefficient of a spatial domain vector and a frequency domain vector, and M is a positive integer; and
sending a first uplink signal to a network device on a first resource, wherein the first uplink signal is an analog signal, and the first uplink signal indicates the M elements.

19. The method according to claim 18, wherein the method further comprises:
receiving first indication information from the network device or another terminal device, wherein the first indication information indicates the M locations, and the another terminal device is a terminal device other than the first terminal device in a plurality of terminal devices.

20. The method according to claim 18, wherein the method further comprises:

receiving a location of a non-zero element in a first matrix from each terminal device in another terminal device, wherein the another terminal device is a terminal device other than the first terminal device in a plurality of terminal devices, and each of the plurality of terminal devices corresponds to one first matrix;
determining the M locations based on locations of non-zero elements in a plurality of first matrices corresponding to the plurality of terminal devices; and
sending first indication information to the another terminal device and/or the network device, wherein the first indication information indicates the M locations.

21. A communication method, applied to a first terminal device, wherein the method comprises:

determining M summation results, wherein each summation result is a sum of a plurality of elements, the plurality of elements are in one-to-one correspondence with a plurality of first matrices, each of the plurality of elements is one of M elements in a corresponding first matrix, the M elements are at M locations in the corresponding first matrix, the M locations are different, any two of the plurality of elements are at same locations in first matrices respectively corresponding to the two elements, each of the plurality of first matrices corresponds to one of a plurality of terminal devices, each first matrix comprises at least one zero element and/or at least one non-zero element, each non-zero element is a combination coefficient, the combination coefficient is a combination coefficient of a spatial domain vector and a frequency domain vector, and M is a positive integer; and
sending a precoding matrix indicator to a network device, wherein the precoding matrix indicator is determined based on the M summation results, the precoding matrix indicator indicates a downlink precoding matrix, and the downlink precoding matrix is used to send data.

22. The method according to claim 21, wherein the method further comprises:

receiving second information from each terminal device in another terminal device, wherein the second information indicates a non-zero element in a first matrix corresponding to the terminal device that sends the second information and a location of the non-zero element, the another terminal device is a terminal device other than the first terminal device in the plurality of terminal devices, and the M locations are determined based on locations of non-zero elements in the plurality of first matrices; or

receiving third information from each terminal device in another terminal device, wherein the third information indicates M elements in a first matrix corresponding to the terminal device that sends the third information, the another terminal device is a terminal device other than the first terminal device in the plurality of terminal devices, and respective M elements corresponding to any two of the plurality of terminal devices are at same M locations in first matrices respectively corresponding to the two terminal devices.

23. The method according to claim 21 or 22, wherein the method comprises:

receiving first data from the network device; and

sending response information to the network device, wherein the response information indicates whether a second terminal device successfully receives the first data, or indicates whether all the plurality of terminal devices successfully receive the first data, and the second terminal device is one of the plurality of terminal devices.

24. The method according to claim 23, wherein channel quality of the second terminal device is less than or equal to a first threshold.

25. The method according to claim 23 or 24, wherein the method further comprises:
receiving second indication information from the network device, wherein the second indication information indicates the first terminal device to send the response information to the network device.

26. A communication apparatus, comprising a module configured to perform the method according to any one of claims 1 to 25.

27. A communication apparatus, comprising a processor and a communication interface, wherein the communication interface is configured to: receive a signal from a communication apparatus other than the communication apparatus and transmit the signal to the processor, or send a signal from the processor to a communication apparatus other than the communication apparatus; and the processor is configured to implement the method according to any one of claims 1 to 25 by using a logic circuit or executing code instructions.

28. A computer-readable storage medium, wherein the storage medium stores a computer program or instructions, and when the computer program or the instructions are executed by a communication apparatus, the method according to any one of claims 1 to 25 is implemented.

FIG. 1

FIG. 2

FIG. 3

Third matrix

FIG. 4

| Network device | First UE | Second UE |
|---|---|---|

S501: First downlink reference signal S1

S502: Second downlink reference signal S2

S503: First channel quality

S504: Second channel quality

S505: Determine a first power control parameter and a second power control parameter

S506: Information 1 (indicating the first power control parameter)

S507: Information 2 (indicating the second power control parameter)

S508a: Information 3 (indicating a first resource)

S508b: Information 3 (indicating the first resource)

S509: First uplink reference signal sequence S5

S510: Second uplink reference signal sequence S6

S511: Third uplink reference signal sequence S7

S512: Fourth uplink reference signal sequence S8

S513: Determine a downlink precoding matrix

S514: First data

S515: First data

S516: Third response information

FIG. 5

Network
device

θ1 and θ2  θ3 and θ4          θ5 and θ6     θ7 and θ8

A plurality
of UEs

UE 1      UE 2          UE 1     UE 2

FIG. 6

FIG. 7

| Network device | First UE | Second UE |
|---|---|---|

S801a: First downlink
reference signal S1

S801b: Second downlink reference signal S2

S802: Information 4

S803: Information 5

S804: Determine M summation results

S805: Precoding matrix indicator

S806a: First data

S806b: First data

S807: Third response
information

FIG. 8

Communication apparatus
900

Transceiver module
901

Processing module
902

FIG. 9

Communication apparatus
1000

Processor
1001

Communication
interface
1002

Memory
1003

FIG. 10

## INTERNATIONAL SEARCH REPORT

| | International application No. |
|---|---|
| | **PCT/CN2023/097383** |

### A. CLASSIFICATION OF SUBJECT MATTER

H04B7/0456(2017.01)i

According to International Patent Classification (IPC) or to both national classification and IPC

### B. FIELDS SEARCHED

Minimum documentation searched (classification system followed by classification symbols)

IPC: H04B

Documentation searched other than minimum documentation to the extent that such documents are included in the fields searched

Electronic data base consulted during the international search (name of data base and, where practicable, search terms used)

CNTXT, VEN, ENTXTC, ENTXT, OETXT, CNKI, 3GPP, IEEE: 探测参考信号, 预编码, 矩阵, 指示, 上行, 下行, 合并, 联合, 组合, 共享, 共用, 求和, 简化, 开销, SRS, precode, matrix, indicate, uplink, downlink, combine, share, sum, simplify, overhead

### C. DOCUMENTS CONSIDERED TO BE RELEVANT

| Category* | Citation of document, with indication, where appropriate, of the relevant passages | Relevant to claim No. |
|---|---|---|
| X | CN 101257367 A (KONINKLIJKE PHILIPS ELECTRONICS N.V. et al.) 03 September 2008 (2008-09-03) <br> description, pages 2-4 | 1, 8-15, 26-28 |
| X | WO 2022021443 A1 (HUAWEI TECHNOLOGIES CO., LTD.) 03 February 2022 (2022-02-03) <br> description, pages 1-4 | 1, 8-15, 26-28 |
| A | CN 101626264 A (ZTE CORP.) 13 January 2010 (2010-01-13) <br> entire document | 1-28 |
| A | CN 107248878 A (BEIJING XINWEI TELECOM TECHNOLOGY INC.) 13 October 2017 (2017-10-13) <br> entire document | 1-28 |
| A | CN 110875766 A (TELECOMMUNICATIONS TECHNOLOGY RESEARCH INSTITUTE CO., LTD.) 10 March 2020 (2020-03-10) <br> entire document | 1-28 |
| A | US 2015236773 A1 (LG ELECTRONICS INC.) 20 August 2015 (2015-08-20) <br> entire document | 1-28 |

☑ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **28 July 2023** | **12 August 2023** |

| Name and mailing address of the ISA/CN | Authorized officer |
|---|---|
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/097383**

**C.     DOCUMENTS CONSIDERED TO BE RELEVANT**

| Category* | Citation of document, with indication, where appropriate, of the relevant passages | Relevant to claim No. |
|---|---|---|
| A | US 2018091207 A1 (NTT DOCOMO INC.) 29 March 2018 (2018-03-29)<br>entire document | 1-28 |

Form PCT/ISA/210 (second sheet) (July 2022)

**INTERNATIONAL SEARCH REPORT**
Information on patent family members

International application No.

**PCT/CN2023/097383**

| Patent document cited in search report | | | Publication date (day/month/year) | Patent family member(s) | | | Publication date (day/month/year) |
|---|---|---|---|---|---|---|---|
| CN | 101257367 | A | 03 September 2008 | US | 2010027713 | A1 | 04 February 2010 |
| | | | | US | 8300727 | B2 | 30 October 2012 |
| | | | | JP | 2010520657 | A | 10 June 2010 |
| | | | | JP | 5295980 | B2 | 18 September 2013 |
| | | | | KR | 20090126271 | A | 08 December 2009 |
| | | | | KR | 101346123 | B1 | 31 December 2013 |
| | | | | WO | 2008104907 | A2 | 04 September 2008 |
| | | | | WO | 2008104907 | A3 | 31 December 2008 |
| | | | | EP | 2115979 | A2 | 11 November 2009 |
| | | | | EP | 2115979 | B1 | 11 April 2018 |
| | | | | EP | 2115979 | B2 | 12 January 2022 |
| | | | | TW | 200838190 | A | 16 September 2008 |
| | | | | TWI | 413370 | B | 21 October 2013 |
| | | | | CN | 101257367 | B | 27 March 2013 |
| | | | | IN | 200905444 | P4 | 11 June 2010 |
| WO | 2022021443 | A1 | 03 February 2022 | CN | 115244864 | A | 25 October 2022 |
| CN | 101626264 | A | 13 January 2010 | CN | 101626264 | B | 20 March 2013 |
| CN | 107248878 | A | 13 October 2017 | | None | | |
| CN | 110875766 | A | 10 March 2020 | CN | 110875766 | B | 25 May 2021 |
| US | 2015236773 | A1 | 20 August 2015 | WO | 2014038832 | A1 | 13 March 2014 |
| | | | | US | 9369193 | B2 | 14 June 2016 |
| US | 2018091207 | A1 | 29 March 2018 | US | 10256886 | B2 | 09 April 2019 |
| | | | | WO | 2016164058 | A1 | 13 October 2016 |
| | | | | EP | 3281302 | A1 | 14 February 2018 |
| | | | | JP | 2018511271 | A | 19 April 2018 |
| | | | | JP | 6594443 | B2 | 23 October 2019 |
| | | | | CN | 107925457 | A | 17 April 2018 |

Form PCT/ISA/210 (patent family annex) (July 2022)

**REFERENCES CITED IN THE DESCRIPTION**

**Patent documents cited in the description**

- CN 202210761826